# EUROPEAN PATENT SPECIFICATION

(11) **EP 3 305 599 B1**
(45) Date of publication and mention of the grant of the patent: **02.09.2020**
(21) Application number: 16803404.9
(22) Date of filing: 01.06.2016
(51) Int. Cl.: G02B 5/10, G02B 7/185, B60S 1/60, B60R 1/06

(54) **MIRROR AND VEHICLE MIRROR**
SPIEGEL UND FAHRZEUGSPIEGEL
MIROIR ET RÉTROVISEUR DE VÉHICULE

(30) Priority: 01.06.2015 JP 2015111242
(43) Date of publication of application: 11.04.2018
(73) Proprietor: MITSUBA Corporation, Kiryu-shi Gunma 376-8555 (JP)
(72) Inventor: KURIHARA, Hitoshi, Kiryu-shi Gunma 376-8555 (JP); IZUMI, Sumiyasu, Kiryu-shi Gunma 376-8555 (JP)
(74) Representative: Cabinet Laurent & Charras
(86) International application number: PCT/JP2016/066254
(87) International publication number: WO 2016/194970

(56) References cited:
- JP-A- H0 820 282
- JP-A- H07 311 305
- JP-A- H07 311 305
- JP-A- S62 150 201
- JP-A- S62 150 201
- JP-A- 2001 055 087
- JP-A- 2005 231 586
- JP-A- 2007 115 555
- JP-A- 2007 115 555
- US-A1- 2014 328 072
- US-A1- 2015 085 336
- US-A1- 2015 085 336
- US-A1- 2015 138 637
- US-A1- 2015 138 637

## Description

### Technical Field

The present invention relates to a vehicle mirror.

### Background Art

Conventionally, a technology in which an entire flexible mirror is bent and deformed such that an angle of reflection of light changes moving from a center of the mirror toward a side portion is known. For example, when such a mirror is employed as a door mirror of a vehicle or the like, a visible region behind the vehicle body widens.

Here, a flexible mirror is formed in a configuration in which a silver-colored film or the like having a high reflectance with respect to visible light is provided on a surface of a plate having flexibility made of a resin, iron, aluminum or the like. Thus, a mirror image is reflected in the film.

### Related Art Document

### Patent Document

Patent Document 1
   Japanese Unexamined Patent Application, First Publication No. 2006-273028
Patent Document 2
   Japanese Unexamined Patent Application, First Publication No. 2014-95848

### Summary of Invention

### Technical Problem

A mirror in which a silver-colored film having a high reflectance with respect to visible light is provided on a surface of a plate having flexibility made of a resin, iron, aluminum or the like as in the conventional art described above has a problem in that the clarity of the mirror image is low and good visibility may not be obtainable.

In addition, when the radius of curvature of the mirror is changed, distortion may occur in the film, a portion of the film may become whitened, and thus there is a problem in that good visibility may not be obtainable. A mirror vehicle having these drawbacks is disclosed in document JP H07 311305.

The present invention has been made in view of the above circumstances, and it is an object of the present invention to provide a vehicle mirror in which good visibility can be obtained.

### Solution to Problem

To solve the above problem, the vehicle mirror of the present invention is as defined by the appended claims. According to a first aspect of the present invention, a mirror includes a surface of tempered glass on which mirror finishing is applied and a back surface of the tempered glass on which a thin film which is impermeable and has low reflectance with respect to visible light is provided.

As described above, since tempered glass is used, it is possible to set a plate thickness of the glass to be small. When the plate thickness is set to be small, there is less susceptibility to the refractive index of glass, and the clarity of a mirror image can be enhanced. Therefore, a mirror in which good visibility can be obtained can be enhanced. Therefore, a mirror in which good visibility can be obtained can be provided.

According to a second aspect of the present invention, in the mirror according to the first embodiment of the present invention, the tempered glass may be configured to be flexible and the tempered glass may be held by a flexible holder.

With the configuration described above, it is possible to widen a visible region by changing a reflection angle of light with respect to the tempered glass. Since the tempered glass is used, whitening does not occur even when a radius of curvature of the tempered glass is changed. Therefore, good visibility can be reliably obtained.

According to a third aspect of the present invention, the mirror according to the second embodiment of the present invention may include a curvature changing device with which the tempered glass may be bent and deformed and a radius of curvature of the tempered glass may be variable.

With the configuration described above, the mirror can be easily bent and deformed to have an arbitrary radius of curvature. Therefore, a user-friendly mirror can be provided.

According to a fourth aspect of the present invention, a vehicle mirror used to check behind a vehicle body includes a mirror according to any one of the first to third aspects and a housing which holds the mirror.

With the configuration described above, it is possible to obtain clear visibility behind the vehicle body.

According to a fifth aspect of the present invention, a vehicle mirror used to check behind a vehicle body includes a mirror according to claim 3 and a housing provided outside the vehicle body and configured to hold the mirror, wherein the curvature changing device includes a support plate, provided in the housing, to which a back surface of the mirror is attached and a driving portion to which the back surface of the mirror is attached separately from the support plate, and the support plate and the driving portion cooperate to bend and deform the mirror.

With the configuration described above, the mirror used as a vehicle mirror can be easily bent and deformed.

According to a sixth aspect of the present invention, in the vehicle mirror according to the fifth aspect of the present invention, an outer side with respect to a center in a vehicle width direction of the mirror may be bent and deformed.

With the configuration described above, it becomes easy to accurately ascertain a distance between a subject vehicle and a following vehicle as compared with a case in which an entire mirror is bent and deformed. Therefore, it is possible to enhance the safety of operations such as lane change.

According to a seventh aspect of the present invention, in the vehicle mirror according to the fifth or sixth aspect of the present invention, the mirror may be fixed by the support plate and a back surface side of the mirror may be pulled by the driving portion to bend and deform the mirror.

With the configuration described above, the mirror can be bent and deformed while the mirror is accommodated in the housing.

According to an eighth aspect of the present invention, the vehicle mirror according to any one of the fourth to seventh aspects of the present invention may include a vibration generating device provided in the housing and configured to apply vibration to the back surface side of the mirror.

Here, as described above, since tempered glass is used, it is possible to set the plate thickness of the glass to be small. When the plate thickness is set to be small, vibration can be easily transmitted to the entire mirror and thus it is possible to reduce the size of the vibration generating device. Then, with weak vibrations, for example, water droplets on the surface of the mirror can be efficiently repelled.

According to a ninth aspect of the present invention, in the vehicle mirror according to the eighth aspect of the present invention, the vibration generating device may be a linear actuator.

With the configuration described above, vibration can be applied to the mirror with a simple structure.

According to a tenth aspect of the present invention, in the vehicle mirror according to any one of the fourth to ninth aspects of the present invention, a heater may be provided on the back surface of the mirror.

Here, as described above, since tempered glass is used, it is possible to set the plate thickness of the glass to be small. When the plate thickness is set to be small, heat is easily transmitted to the entire mirror and thus the heater can be simplified. Then, it is possible to efficiently prevent the mirror from becoming fogged while reducing an amount of heating of the heater.

According to an eleventh aspect of the present invention, in the vehicle mirror according to any one of the fourth to tenth aspects of the present invention, a normal mirror may be provided in the vicinity of the mirror and the normal mirror may have a region in which a radius of curvature of the normal mirror is regulated by law.

With the configuration described above, behind the vehicle body can be reliably checked in a region regulated by law with the normal mirror. By providing a mirror in a portion other than the region regulated by law, good visibility behind the vehicle body can be secured. In other words, the mirror can be bent and deformed only at a position at which the region regulated by law is reliably avoided.

According to a twelfth aspect of the present invention, in the vehicle mirror according to the eleventh aspect of the present invention, the normal mirror may have a mirror exposing portion that exposes the mirror on a surface other than the region.

With the configuration described above, it is possible to easily expose the mirror on the rear side of the normal mirror via the normal mirror.

According to a thirteenth aspect of the present invention, in the vehicle mirror according to the twelfth aspect of the present invention, the mirror exposing portion may be a mirror opening formed in the normal mirror.

With the configuration described above, it is possible to easily expose the mirror on the rear side of the normal mirror via the mirror opening of the normal mirror.

According to a fourteenth aspect of the present invention, in the vehicle mirror according to the eleventh aspect of the present invention, the normal mirror may be formed only in the region and an opening surrounded by the normal mirror and the housing may serve as a mirror exposing portion which exposes the mirror.

With the configuration described above, it is possible to easily expose the mirror on the rear side of the normal mirror while facilitating processing of the normal mirror.

According to a fifteenth aspect of the present invention, in the vehicle mirror according to any one of the twelfth to fourteenth aspects of the present invention, the mirror exposing portion may be one of a transparent glass and a transparent resin plate.

With the configuration described above, irregularities are not formed on a surface of the normal mirror and thus it is possible to provide a vehicle mirror with excellent design.

According to a sixteenth aspect of the present invention, in the vehicle mirror according to any one of the eleventh to fifteenth aspects of the present invention, at least a portion of the normal mirror other than the region may be configured as a non-mirror portion in which no mirror image is reflected.

With the configuration described above, it is possible to prevent an unnecessary mirror image from being reflected in the normal mirror outside of the region regulated by law in the normal mirror. Therefore, it is possible to provide a vehicle mirror with which it is easy to check behind the vehicle body.

According to a seventeenth aspect of the present invention, in the vehicle mirror according to any one of the fourth to tenth aspects of the present invention, a cut portion may be formed in the mirror at a portion other than the region in which the radius of curvature of the mirror is regulated by law and a portion of the mirror on a side opposite to the region with the cut portion interposed therebetween may be flexible independently of the region.

With the configuration described above, the mirror can be bent and deformed only at a position at which the region regulated by law is reliably avoided.

According to an eighteenth aspect of the present invention, in the vehicle mirror according to any one of the fourth to seventeenth aspects of the present invention, a flexible back plate covering the back surface of the mirror may be provided on the back surface of the mirror, and a joint portion configured to join the mirror and the back plate may be provided between an outer peripheral portion of the back surface of the mirror and an outer peripheral portion of the back plate.

With the configuration described above, the mirror can be made slimmer. In addition, when a back surface of the mirror is pulled by a driving portion of a curvature changing device, for example, it is possible to prevent the mirror from being locally deformed by pulling only the portion in which the driving portion of the mirror is connected. That is, even when a connecting portion between the mirror and the driving portion is a portion of the mirror, all desired portions of the mirror can be uniformly bent and deformed.

Further, when both the mirror and the back plate are collectively bent and deformed in a state in which the two of them have been superimposed on each other, since radii of curvature of the two are slightly different, relative positions thereof are deviated. Therefore, by joining only the outer peripheral portion of the back surface of the mirror and the outer peripheral portion of the back plate via the joint portion, stress caused by relative positional deviation can be prevented from being applied to other portions and the back plate can be prevented from being locally deformed.

According to a nineteenth aspect of the present invention, in the vehicle mirror according to any one of the fourth to seventeenth aspects of the present invention, a flexible back plate covering the back surface of the mirror may be provided on the back surface of the mirror, a joint portion configured to join the mirror and the back plate may be provided between the back surface of the mirror and the back plate; and the joint portion may have elasticity.

With the configuration described above, even when a connecting portion between the mirror and the driving portion is a portion of the mirror, the whole of desired portions of the mirror can be uniformly bent and deformed.

In addition, the deviation caused when both the mirror and the back plate are collectively bent and deformed in a state in which the two of them have been superimposed on each other can be absorbed by the joint portion. Therefore, stress caused by the deviation can be prevented from being applied to the mirror or the back plate, or the back plate can be prevented from being locally deformed. Advantageous Effects of the Invention

According to the present invention, since tempered glass is used, it is possible to set the plate thickness of the glass to be small. When the plate thickness is set to be small, there is less susceptibility to the refractive index of glass and the clarity of a mirror image can be enhanced. Therefore, a mirror in which good visibility can be obtained can be provided.

### Brief Description of Drawings

Fig. 1 is a perspective view of a door mirror device according to a first embodiment of the present invention.
Fig. 2 is an exploded perspective view of the door mirror device according to the first embodiment of the present invention.
Fig. 3 is a plan view of a door mirror device according to the first embodiment of the present invention.
Fig. 4 is a partially enlarged cross-sectional view of a mirror main body according to the embodiment of the present invention.
Fig. 5 is a plan view of the mirror main body according to the embodiment of the present invention when viewed from the front.
Fig. 6 is a plan view of a mirror support according to the first embodiment of the present invention when viewed from the front.
Fig. 7 is a cross-sectional view taken along line A-A of Fig. 3.
Fig. 8A is a view showing a bending deformation operation of a mirror according to the first embodiment of the present invention and showing a state in which the mirror is flat.
Fig. 8B is a view showing a bending deformation operation of a mirror according to the first embodiment of the present invention and showing a state in which the mirror is bent and deformed.
Fig. 9A is a cross-sectional view when a mirror according to the embodiment of the present invention is flat.
Fig. 9B is a view showing a mirror image reflected when the mirror according to the embodiment of the present invention is flat.
Fig. 10A is a cross-sectional view of a mirror according to the embodiment of the present invention when an outer side in a vehicle width direction of the mirror is bent and deformed.
Fig. 10B is a view showing a mirror image reflected on a mirror according to the embodiment of the present invention when an outer side in a vehicle width direction of the mirror is bent and deformed.
Fig. 11A is a cross-sectional view in a case in which the entire mirror according to the embodiment of the present invention is bent and deformed.
Fig. 11B is a view showing a mirror image reflected in a case in which the entire mirror according to the embodiment of the present invention is bent and deformed.
Fig. 12 is a partially enlarged perspective view of a mirror according to a second embodiment of the present invention.
Fig. 13A is a view showing a bending deformation operation of a mirror according to the second embodiment of the present invention and showing a state in which the mirror main body is flat.
Fig. 13B is a view showing a bending deformation operation of a mirror according to the second embodiment of the present invention and showing a state in which a mirror main body is bent and deformed.
Fig. 14A is a view showing a bending deformation operation of a mirror according to a third embodiment of the present invention and showing a state in which a mirror main body is flat.
Fig. 14B is a view showing a bending deformation operation of a mirror according to the third embodiment of the present invention and showing a state in which a mirror main body is bent and deformed.
Fig. 15A is a view showing a bending deformation operation of a mirror according to a fourth embodiment of the present invention and showing a state in which a mirror main body is flat.
Fig. 15B is a view showing a bending deformation operation of a mirror according to the fourth embodiment of the present invention and showing a state in which a mirror main body is bent and deformed.
Fig. 16 is a schematic configuration view of a mirror according to a fifth embodiment of the present invention.
Fig. 17 is a schematic configuration view of a mirror according to a first modified example of the fifth embodiment of the present invention.
Fig. 18 is a schematic configuration view of a mirror according to a second modified example of the fifth embodiment of the present invention.
Fig. 19 is a perspective view of a door mirror device according to a sixth embodiment of the present invention.
Fig. 20 is a cross-sectional view of a mirror according to the sixth embodiment of the present invention.
Fig. 21 is a perspective view of a door mirror device according to a first modified example of the sixth embodiment of the present invention.
Fig. 22 is a perspective view of a door mirror device according to a second modified example of the sixth embodiment of the present invention.
Fig. 23 is a perspective view of a door mirror device according to a third modified example of the sixth embodiment of the present invention.
Fig. 24 is a perspective view of a door mirror device according to a seventh embodiment of the present invention.
Fig. 25 is a cross-sectional view of a mirror according to a seventh embodiment of the present invention.
Fig. 26 is a cross-sectional view of a mirror according to an eighth embodiment of the present invention.

### Description of Embodiments

Next, hereinafter, embodiments of the present invention will be described on the basis of the accompanying drawings.

### (First embodiment)

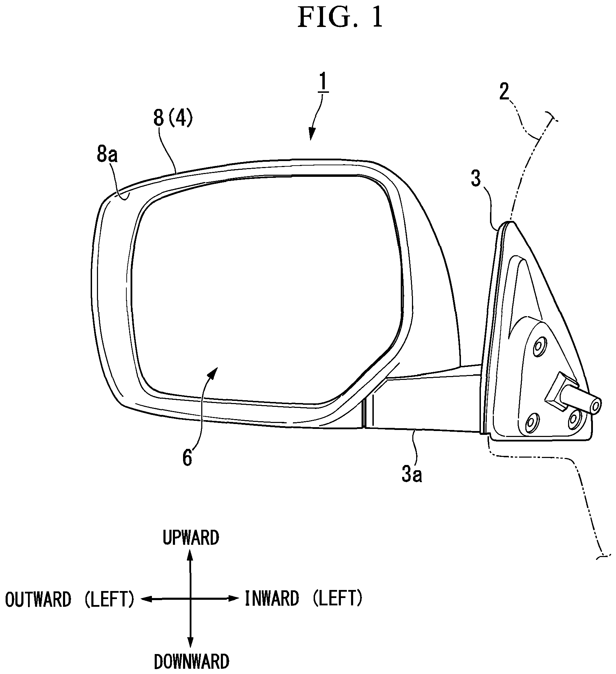

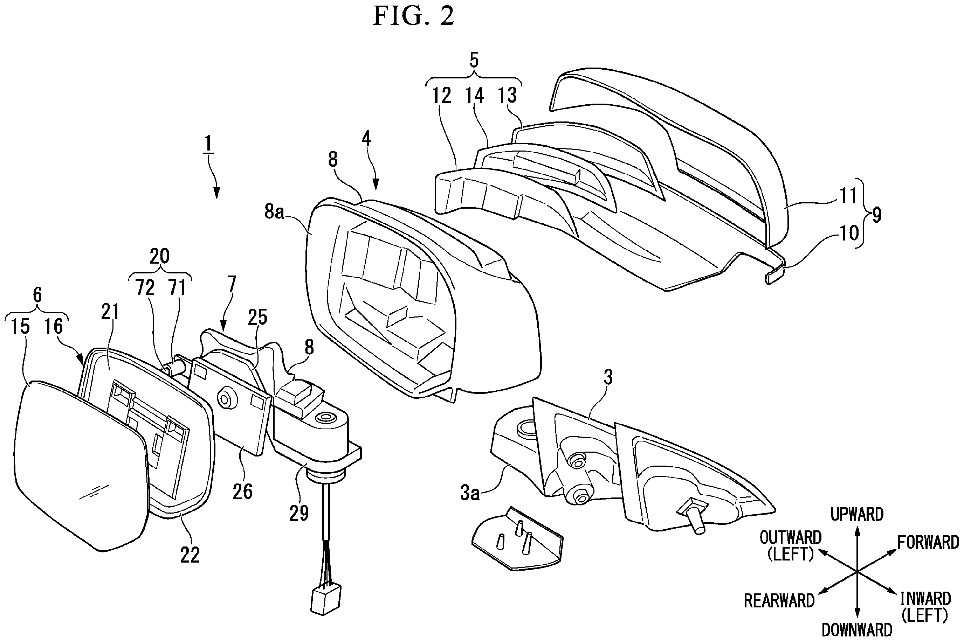

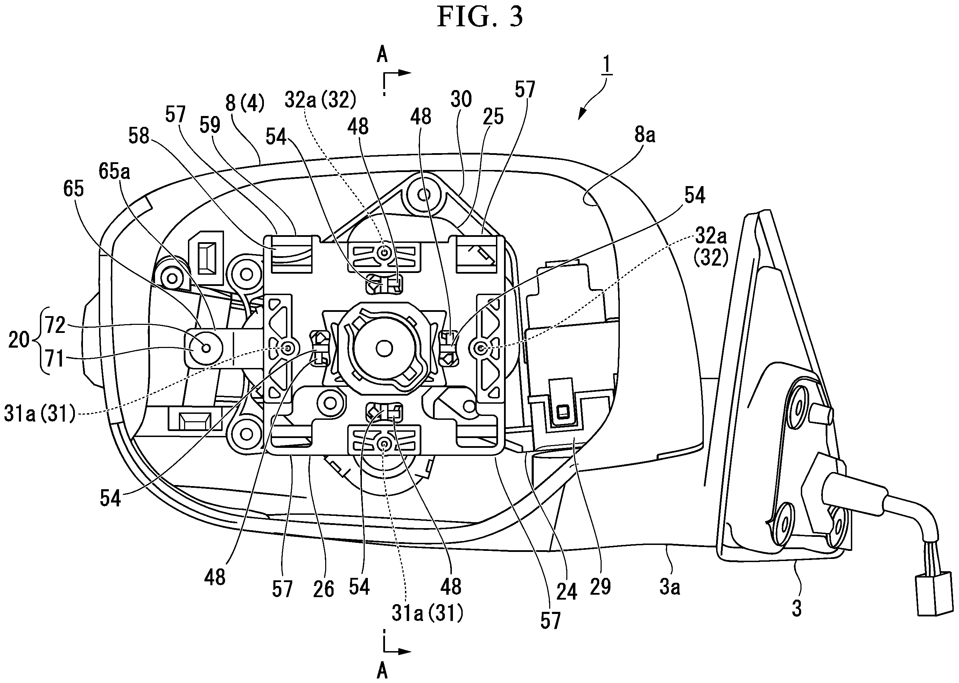

Fig. 1 is a perspective view of a door mirror device (a vehicle mirror) 1 attached to a side of a vehicle body 2 to the left of a front seat, Fig. 2 is an exploded perspective view of the door mirror device 1, and Fig. 3 is a plan view of the door mirror device 1 and is showing a state in which a mirror 6 is removed.

In the following description, unless otherwise specified, forward and backward directions coincide with forward and backward directions in the vehicle body 2, and left and right directions coincide with left and right directions when a passenger faces the front. In addition, in the following description, there are cases in which "upward in a vertical direction" is referred to simply as "upward", "downward in a vertical direction" is referred to simply as "downward", or the like so that the description can be more easily understood.

As shown in Figs. 1 to 3, the door mirror device 1 is installed such that it can be opened and closed in a vehicle width direction with respect to an arm portion 3a of a door mirror stay 3 fixed to the vehicle body 2 on the left side of the front seat (for example, door). Thus, the door mirror device 1 can be rotated in a direction approaching the vehicle body 2 (closing direction) to be stored or rotated in a direction away from the vehicle body 2 (opening direction) to be used as a form that allows visual recognition of the rear by operating a switch (not shown) in the vicinity of a driver's seat inside the vehicle or by operating a portable remote control switch (not shown).

While a door mirror device 1 is also fixed to the vehicle body 2 on a right of the front seat, the configuration is the same as that of the door mirror device 1 fixed to the left side of the front seat except that it is line-symmetrical with respect to the door mirror device 1 fixed to the left side. Therefore, in the following description, the description of a case in which the door mirror device 1 is provided on the right side of the front seat will be omitted.

The door mirror device 1 includes a cup-shaped mirror housing 4 in which the rear is open, a turn lamp 5 provided on the front surface side of the mirror housing 4, the mirror 6 provided on an opening side (the rear side) of the mirror housing 4, a drive unit 7 provided in the mirror housing 4 and configured to support the mirror 6, and a deformation driving portion 20 provided in the mirror housing 4 and configured to bend and deform the mirror 6.

### (Mirror housing)

The mirror housing 4 includes a cup-shaped housing main body 8 molded of a resin or the like and having an opening 8a formed on the rear side and a cover 9 attached to the front surface side of the housing main body 8. The cover 9 forms an exterior design of the door mirror device 1, and is constituted by a lower cover (cover housing) 10 and an upper cover (skullcap) 11 which are separable in the vertical direction.

### (Turn lamp portion)

The turn lamp 5 radiates light to an oncoming vehicle, a following vehicle, or the like to secure a turn signal function regulated by law. The turn lamp 5 is provided between substantially a center in the vehicle width direction and an outer end portion on the front surface of the mirror housing 4. The turn lamp 5 includes an outer housing 12 accommodated in the mirror housing 4, an outer lens 13 abutting against the outer housing 12 from the front and integrated with the outer housing 12, and an inner housing 14 provided between the outer housing 12 and the outer lens 13. Further, a light emitting unit (not shown) formed with an LED (light emitting diode) or the like is provided in the inner housing 14.

### (Mirror)

The mirror 6 includes a mirror main body 15 and a mirror support 16.

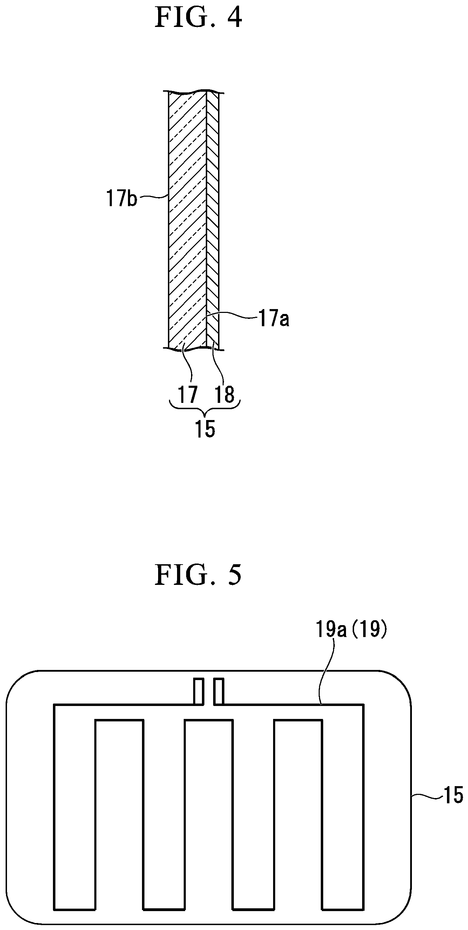

Fig. 4 is a partially enlarged cross-sectional view of the mirror main body 15, and Fig. 5 is a plan view of the mirror main body 15 when viewed from the front.

As shown in Figs. 4 and 5, in the mirror main body 15, a thin film 18 is attached to a back surface 17a of tempered glass 17. The tempered glass 17 has flexibility. Specifically, as the tempered glass 17, "Dragontrail" (Dragontrail is a registered trademark of Asahi Glass Co., Ltd.) available from Asahi Glass Co., Ltd. is used. Mirror finishing is applied to a surface 17b of the tempered glass 17.

The thin film 18 is a film 18 which is impermeable and has low reflectance with respect to visible light. Since the thin film 18 is attached to the back surface 17a of the tempered glass 17, a mirror image is reflected on the surface 17b of the tempered glass 17 (the surface of the mirror main body 15).

Also, a heater 19 is provided on a back surface of the mirror main body 15 (the surface on the thin film 18 side). The heater 19 is formed by winding a heating wire 19a around the entire mirror main body 15 in well-balanced manner. Thereby, for example, when the mirror main body 15 becomes foggy, the heater 19 heats the mirror main body 15 and the fogging on the entire mirror main body 15 can be eliminated.

Here, since the mirror main body 15 utilizes the tempered glass 17, damage to the mirror main body 15 due to an external force or the like can be prevented even when a plate thickness of the glass is set to be small. Therefore, the plate thickness of the mirror main body 15 is set to be small as compared with that of a conventional mirror (a mirror manufactured using ordinary glass). As a result, the heat generated from the heating wire 19a can be efficiently transmitted to the entire mirror main body 15.

Thus, the density of the heating wires 19a in the mirror main body 15 is low compared to a case in which heating wires 19a are routed around a conventional mirror. In other words, the routing of the heating wires 19a is sparse in the mirror main body 15. Even though the routing of the heating wires 19a is sparse, the entire mirror main body 15 can be sufficiently heated.

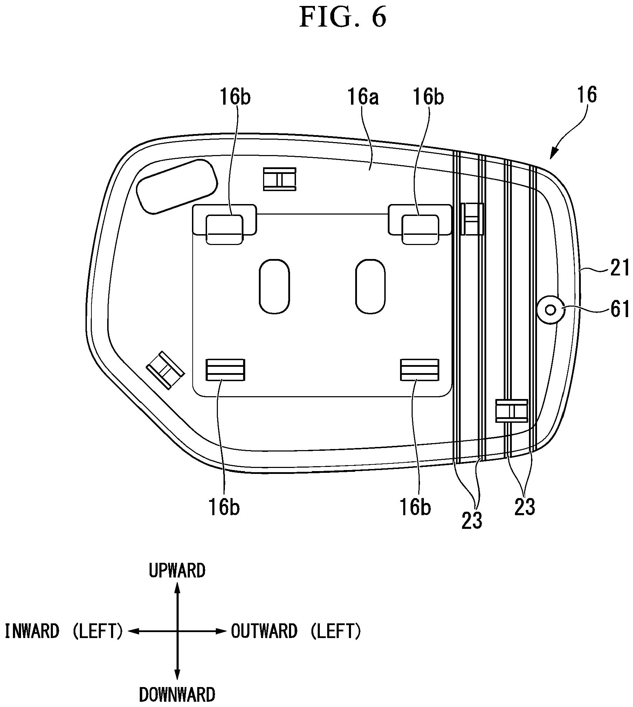

Fig. 6 is a plan view of the mirror support 16 when viewed from the front.

As shown in Fig. 2 and 6, the mirror support 16 is integrally molded and includes a base portion 21 formed to correspond to an outer shape of the mirror main body 15 and a fitting portion 22 formed to stand up from an outer peripheral edge of the base portion 21. Thus, the mirror main body 15 and the mirror support 16 are integrated by fitting the mirror main body 15 into the fitting portion 22.

Further, the mirror main body 15 and the mirror support 16 may be integrated simply by merely fitting the mirror main body 15 into the mirror support 16, or the mirror main body 15 and the mirror support 16 may be integrated by bonding the mirror main body 15 to the mirror support 16 using an adhesive. When the mirror main body 15 is bonded and fixed to the mirror support 16, the fitting portion 22 may not be formed in the mirror support 16.

Here, the mirror support 16 is formed of a resin. As will be described in detail below, since the mirror support 16 of the present embodiment is bent and deformed, it is preferable that a material of the resin be soft. In addition, a fitting force or adhesion force of the mirror main body 15 with respect to the mirror support 16 is set to such a strength that the mirror main body 15 does not separate from the mirror support 16 when the mirror support 16 is bent and deformed. Further, although not shown, a claw portion or the like may be provided in the mirror support 16 so that the mirror main body 15 does not separate from the mirror support 16.

In addition, on a front surface 16a of the mirror support 16, a plurality of grooves 23 are formed in the vertical direction on an outer side (the right side in Fig. 6) with respect to the center in the vehicle width direction. The shape of the grooves 23 can be set to various shapes such as a V-groove shape, a U-groove shape, or the like. The rigidity of the mirror support 16 is weakened at a portion in which the grooves 23 are formed. Therefore, the portion of the mirror support 16 corresponding to the grooves 23 is flexible in a front-rear direction along the grooves 23.

Further, on the front surface 16a of the mirror support 16, a connecting portion 61 is provided at substantially a center in the vertical direction and on an outermost side in the vehicle width direction. That is, the connecting portion 61 is disposed on an outer side with respect to the grooves 23 in the vehicle width direction. A tip of an actuating shaft 72 of the deformation driving portion 20, to be described below, is rotatably connected to the connecting portion 61.

On the front surface 16a of the mirror support 16, an engaging claw 16b engageable with a mirror engaging portion 57 of a pivot plate 26 to be described below is provided on a center side with respect to the grooves 23 in the vehicle width direction. When the engaging claw 16b and the mirror engaging portion 57 are engaged, the drive unit 7 and the mirror 6 are integrated.

### (Drive unit)

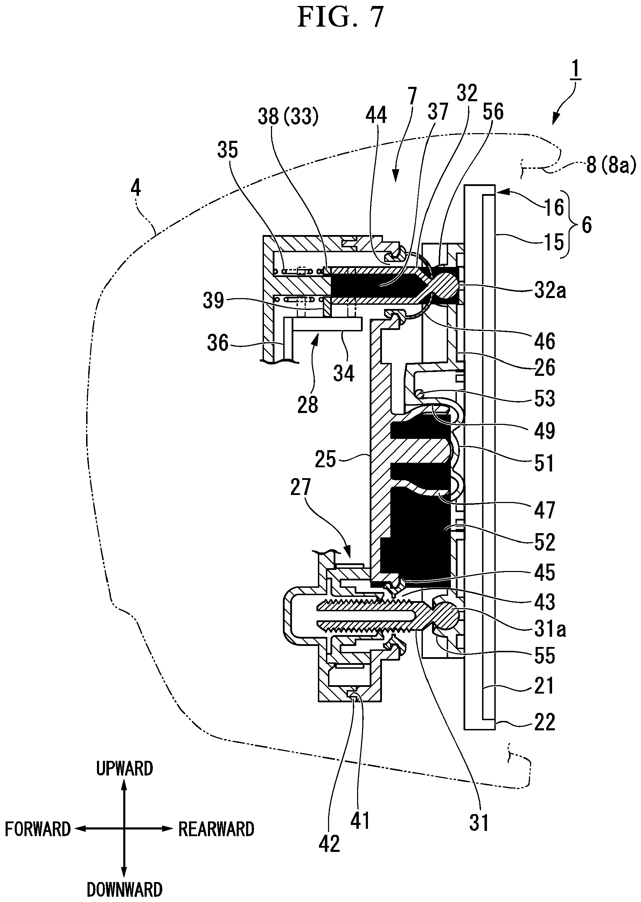

Fig. 7 is a cross-sectional view taken along line A-Aof Fig. 3.

As shown in Figs. 2, 3, and 7, the drive unit 7 is for supporting the mirror 6 and tilting the mirror 6.

The drive unit 7 is constituted by a bracket 24 rotatably attached to the arm portion 3a of the door mirror stay 3, a holder 25 attached to the bracket 24, the pivot plate 26 tiltably attached to the holder 25, a mirror tilting drive portion 27, an angle detecting portion 28, and the like accommodated in an accommodation space formed between the bracket 24 and the holder 25. All of the bracket 24, the holder 25, and the pivot plate 26 are formed of a resin.

The bracket 24 includes a storage drive portion case 29 and a bracket main body portion 30 formed to extend outward in the vehicle width direction from the storage drive portion case 29, which are integrally molded. A shaft (not shown) fixed to the arm portion 3a in an upright posture is inserted into the storage drive portion case 29 from a bottom portion of the storage drive portion case 29. The shaft is connected to a storage drive motor (not shown) fixed in the storage drive portion case 29 via a gear (not shown).

Since the shaft is fixed, when the storage drive motor rotates, the storage drive motor revolves around the shaft. Thereby, the bracket 24 fixing the storage drive motor rotates about the shaft. As a result, the mirror housing 4 fixed to the bracket 24 rotates about the shaft.

The bracket main body portion 30 is formed in a substantially plate shape and assumes a substantially vertical posture when the door mirror device 1 is installed in a door of a vehicle. The mirror tilting drive portion 27 accommodated in the bracket main body portion 30 includes two actuating shafts 31. The two actuating shafts 31 are moved forward and backward in the front-rear direction by a motor and a worm reduction mechanism (which are not shown). A spherical head portion 31a is integrally formed at a tip of each actuating shaft 31. The head portion 31a is connected to the pivot plate 26.

Due to the forward and backward movement of the two actuating shafts 31 configured as above, the mirror 6 is tilted via the pivot plate 26. Specifically, one of the two actuating shafts 31 is disposed on a lower side of the bracket main body portion 30 and tilts the mirror 6 in the vertical direction (hereinafter, the actuating shaft 31 tilting in this manner is referred to as a vertical tilting actuating shaft 31). Also, the other one of the two actuating shafts 31 is disposed on the outer side (the left side in Fig. 3) in the vehicle width direction of the bracket main body portion 30 and tilts the mirror 6 in a lateral direction (hereinafter, the actuating shaft 31 tilting in this manner is referred to as a lateral tilting actuating shaft 31).

As shown in Fig. 7 in detail, the angle detecting portion 28 detects a tilt angle of the mirror 6 in the vertical direction and detects a tilt angle in the lateral direction. The angle detecting portion 28 includes two detection rods 32, a contact point member 33 attached corresponding to each of the detection rods 32, a variable resistor 34 provided corresponding to each contact point member 33 so that the contact point member 33 slides thereon, a spring 35 attached corresponding to each of the detection rods 32, a substrate 36, and a guide rod 37 to which the detection rod 32, the contact point member 33, and the spring 35 are attached. The variable resistor 34 is electrically connected to the substrate 36.

One of the two guide rods 37 is disposed on an upper side of the bracket main body portion 30 to face the vertical tilting actuating shaft 31 in the vertical direction. The detection rod 32, the contact point member 33, and the spring 35 attached to the guide rod 37 disposed in this manner and the corresponding variable resistor 34 are used for detecting vertical tilting of the mirror 6.

Also, the other one of the two guide rods 37 is disposed on an inner side in the vehicle width direction of the bracket main body portion 30 to face the lateral tilting actuating shaft 31 in the lateral direction. The detection rod 32, the contact point member 33, and the spring 35 attached to the guide rod 37 disposed in this manner and the corresponding variable resistor 34 are used for detecting lateral tilting of the mirror 6.

Each component will be described in more detail.

The detection rod 32 has a hollow tubular shape with its tip side closed, and the guide rod 37 is slidably inserted into the hollow portion thereof. Thus, the detection rod 32 is supported on the guide rod 37 to be movable along an axis thereof. Further, a spherical head portion 32a is formed at a tip of the detection rod 32.

The contact point member 33 is attached to the guide rod 37 on the front side of the detection rod 32 to be slidable with respect to the guide rod 37. The contact point member 33 includes a ring portion 38 through which the guide rod 37 is inserted and a contact point 39 protruding toward a radial outer side from the ring portion 38, and is configured such that the contact point 39 slides in contact with the variable resistor 34. Thus, the contact point member 33 is pressed against a front end of the detection rod 32 by the spring 35 disposed on an outer side of the guide rod 37. Thereby, the contact point member 33 moves in the axial direction of the guide rod 37 following the detection rod 32.

When the contact point member 33 moves in the axial direction of the guide rod 37, the contact point 39 slides on the variable resistor 34 in a longitudinal direction thereof, and a resistance value of the variable resistor 34 changes. In the angle detecting portion 28, a tilt angle of the pivot plate 26 (in other words, the tilt angle of the mirror 6) is perceived as an axial displacement of the detection rod 32, and the axial displacement of the detection rod 32 is detected as a change in resistance value of the variable resistor 34. In other words, a tilt angle of the mirror 6 is calculated on the basis of the resistance value of the variable resistor 34.

The mirror tilting drive portion 27 and the angle detecting portion 28 configured as above are accommodated between the bracket 24 and the holder 25, and a fitting portion 41 is formed on the outer peripheral portion of the holder 25. The fitting portion 41 is fitted to a fitting portion 42 formed in the bracket 24. Thereby, an accommodation portion in which the mirror tilting drive portion 27 and the angle detecting portion 28 are accommodated is formed by the bracket 24 and the holder 25.

In the holder 25, a hole 43 into which the actuating shaft 31 is inserted and a hole 44 into which the detection rod 32 is inserted are formed at positions corresponding to the actuating shaft 31 and the detection rod 32. Thus, the tip of the actuating shaft 31 protrudes from the holder 25 via the hole 43. Also, the tip of the detection rod 32 protrudes from the holder 25 via the hole 44. Further, a grommet 45 is mounted between the hole 43 and the actuating shaft 31 and a grommet 46 is mounted between the hole 44 and the detection rod 32. With these grommets 45 and 46, it is possible to prevent dust from entering the interior.

Further, a pivot shaft 47 whose outer surface is formed as a part of a spherical surface is integrally provided at a substantially center of a rear surface of the holder 25. On the rear surface of the holder 25, four substantially U-shaped locking protrusions 48 protruding rearward are formed around the pivot shaft 47. The locking protrusions 48 are disposed at intervals of 90 degrees around the pivot shaft 47. Thus, the pivot plate 26 tiltably engages with the pivot shaft 47, the locking protrusions 48, the actuating shafts 31, and the detection rods 32.

As shown in Fig. 3 in detail, the pivot plate 26 connects the mirror 6 with the drive unit 7 (supports the mirror 6) and is formed in a substantially rectangular shape in a plan view.

Also, the mirror engaging portion 57 is provided at each of the four corners of the pivot plate 26. The mirror engaging portion 57 is constituted by a square hole 58 having a rectangular shape in a plan view and a pin 59 straddling the square hole 58 in a lateral direction. Then, a rear surface of the pivot plate 26 and the mirror support 16 are overlapped, the mirror engaging portion 57 and the engaging claw 16b of the mirror support 16 are engaged with each other (see Fig. 6) and thereby the mirror 6 is supported by the pivot plate 26. That is, the pivot plate 26 and the mirror 6 are integrated.

Here, the engaging claw 16b provided in the mirror support 16 is disposed on the central side with respect to the grooves 23 (see Fig. 6). In other words, an area of the rear surface of the pivot plate 26 overlapping the mirror support 16 is set to be sufficiently smaller than an area of the mirror support 16. Then, the mirror 6 is supported by the pivot plate 26 at a position other than the grooves 23 of the mirror support 16, that is, at a center portion of the mirror 6.

On the other hand, a pivot recess portion 49 into which the pivot shaft 47 can be press-fitted is integrally molded at a position corresponding to the pivot shaft 47 on a front surface of the pivot plate 26. An inner surface of the pivot recess portion 49 is formed as a part of a spherical surface. Then, in a state in which the pivot shaft 47 is press-fitted into the pivot recess portion 49, the pivot plate 26 can swing with the pivot shaft 47 as a swing fulcrum.

In addition, on the rear surface of the pivot plate 26, a spring accommodating concave portion 52 having a substantially rectangular shape in a plan view is formed around a convex portion 51 which is a portion corresponding to the pivot recess portion 49. A C-shaped snap ring 53 engaging with a base portion of the convex portion 51 is accommodated in the spring accommodating concave portion 52. The C-shaped snap ring 53 clamps the base portion of the convex portion 51 and prevents the base portion from expanding a diameter thereof. Thereby, the pivot shaft 47 is prevented from being detached from the pivot recess portion 49.

Also, on the pivot plate 26, rotation restricting pins 54 are respectively provided on an outer side of the spring accommodating concave portion 52, that is, at positions corresponding to the locking protrusions 48 of the holder 25. The locking protrusions 48 engage with the rotation restricting pins 54. Thereby, the holder 25 and the pivot plate 26 are prevented from rotating relative to each other about an axis in the front-rear direction that passes through a center of the pivot shaft 47.

Further, spherical receiving seats 55 and 56 are integrally formed on the front surface of the pivot plate 26 respectively at positions corresponding to the actuating shafts 31 and the detection rods 32. The head portion 31a of the actuating shaft 31 is fitted into the spherical receiving seat 55 on the actuating shaft 31 side. On the other hand, the head portion 32a of the detection rod 32 is fitted into the spherical receiving seat 56 on the detection rod 32 side. Thereby, the actuating shaft 31 and the detection rod 32 are inseparably integrally connected to the pivot plate 26 while allowing the sliding of the respective head portions 31a and 32a and the respective spherical receiving seats 55 and 56. Further, the head portion 31a of the actuating shafts 31 and the spherical receiving seat 55 are fitted to be relatively non-rotatable about an axis of the actuating shaft 31.

Here, a deformation driving portion bracket 65 is integrally molded on an outer edge in the vehicle width direction of the pivot plate 26. The deformation driving portion 20 is fixed to the deformation driving portion bracket 65.

### (Deformation driving portion)

As shown in Figs. 2 and 3, a linear actuator is used as the deformation driving portion 20, for example. The deformation driving portion 20 is constituted by a driving portion main body 71 and the actuating shaft 72 provided to be slidably movable with respect to the driving portion main body 71. Then, a base end of the driving portion main body 71 is fixed to the deformation driving portion bracket 65, and the actuating shaft 72 slides in the front-rear direction. The tip of the actuating shaft 72 is rotatably connected to the connecting portion 61 of the mirror support 16.

Here, the deformation driving portion bracket 65 is formed such that an attachment surface 65a to which the deformation driving portion 20 is attached is offset forward from a surface of the pivot plate 26 on the mirror 6 side. Therefore, in a state in which the actuating shaft 72 of the deformation driving portion 20 extends, the tip of the actuating shaft 72 and the surface of the pivot plate 26 on the mirror 6 side are positioned on substantially the same plane.

### (Bending deformation operation of mirror)

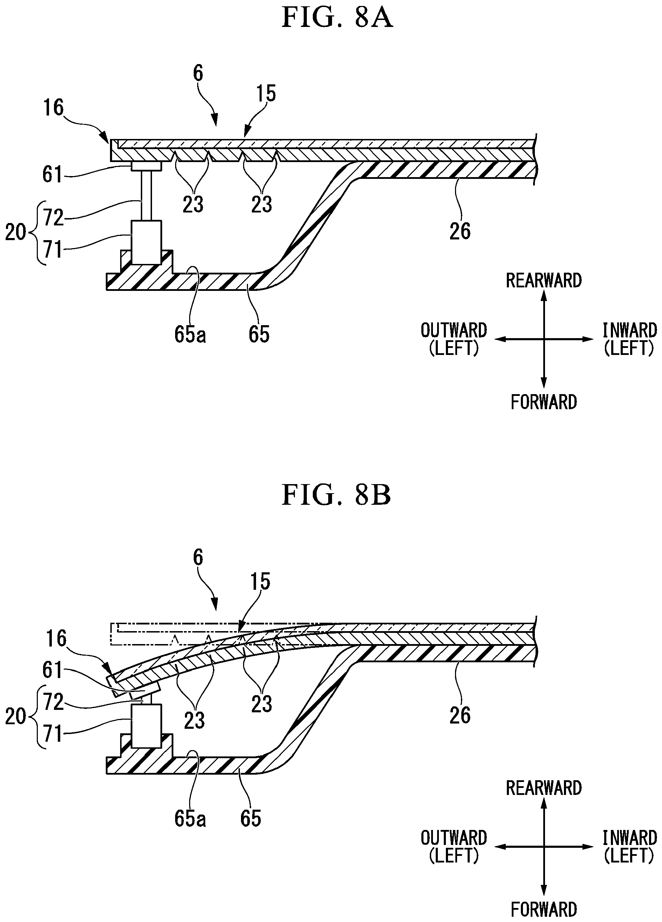

Next, a bending deformation operation of the mirror 6 will be described on the basis of the Figs. 8A to 10B. Fig. 8A is a view showing a bending deformation operation of the mirror 6 and showing a state in which the mirror 6 is flat. Fig. 8B is a view showing a bending deformation operation of the mirror 6 and showing a state in which the mirror 6 is bent and deformed.

As shown in Fig. 8A, normally the actuating shaft 72 of the deformation driving portion 20 extends and the mirror 6 is entirely flat.

In contrast, as shown in Fig. 8B, when the actuating shaft 72 of the deformation driving portion 20 retracts, the outer side in the vehicle width direction of the mirror 6 is pulled toward the front.

Here, the mirror main body 15 of the mirror 6 has flexibility. In addition, the mirror 6 is supported on the pivot plate 26 at the center portion. Therefore, when the outer side in the vehicle width direction of the mirror 6 is pulled, the outer side in the vehicle width direction is bent and deformed. At this time, since the plurality of grooves 23 in the vertical direction are formed on the outer side in the vehicle width direction of the mirror support 16, the mirror 6 can be bent and deformed with a small load.

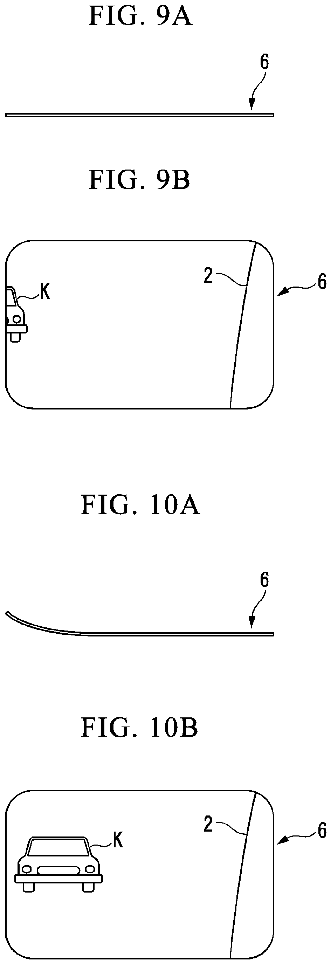

Fig. 9A is a cross-sectional view when the mirror 6 is flat. Fig. 9B is a view showing a mirror image reflected on the mirror 6 in a state of Fig. 9A.

As shown in Fig. 9A, when the mirror 6 is flat, even when a following vehicle K is traveling to the rear as shown in Fig. 9B, for example, the whole of the following vehicle K is not reflected in the mirror 6 and it is difficult for a driver to see the following vehicle K. In addition to this, it is difficult to determine whether the following vehicle K is a two-wheeled vehicle or a four-wheeled vehicle.

Fig. 10A is a cross-sectional view when the outer side in the vehicle width direction of the mirror 6 is bent and deformed. Fig. 10B is a view showing a mirror image reflected on the mirror 6 in a state of Fig. 10A.

As shown in Fig. 10A, when the outer side in the vehicle width direction of the mirror 6 is bent and deformed, a reflection angle of light on the outer side in the vehicle width direction of the mirror 6 changes and the whole of the following vehicle K is reflected in the mirror 6 as shown in Fig. 10B. Therefore, the driver can easily see the following vehicle K as compared with the case in which the entire mirror 6 is flat.

Here, in bending and deforming the mirror 6, only the outer side in the vehicle width direction of the mirror 6 is bent and deformed, while the mirror 6 remains flat between substantially a center in the vehicle width direction of the mirror 6 and an inner side in the vehicle width direction of the mirror 6. Therefore, the mirror 6 is easily bent and deformed by the deformation driving portion 20 as compared with a case in which the entire mirror 6 is bent and deformed.

In addition to this, since the mirror 6 is flat between substantially the center in the vehicle width direction of the mirror 6 and the inner side in the vehicle width direction of the mirror 6, the mirror image of the vehicle body 2 reflected on the inner side in the vehicle width direction of the mirror 6 is not distorted. Therefore, the driver can easily obtain a sense of distance from the vehicle body 2 to the following vehicle K to the rear. This will be described in detail below.

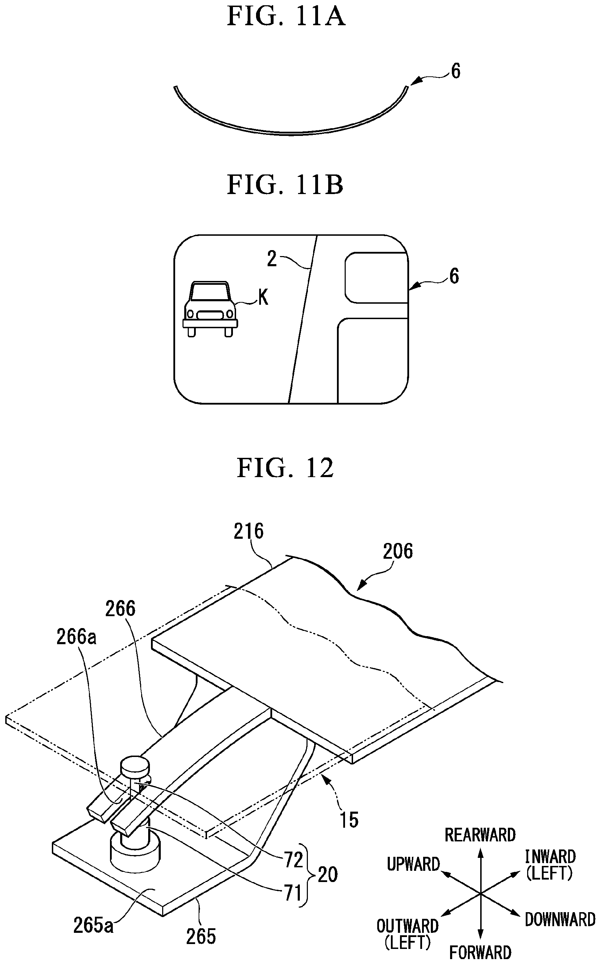

Fig. 11A is a cross-sectional view in a case in which the entire mirror 6 is bent and deformed. Fig. 11B is a view showing a mirror image reflected on the mirror 6 in a state of Fig. 11A.

When the entire mirror 6 is bent and deformed as shown in Fig. 11A, a mirror image of the vehicle body 2 reflected on the inner side in the vehicle width direction of the mirror 6 is also distorted as shown in Fig. 11B. Thus, the driver cannot easily obtain a sense of distance from the vehicle body 2 to the following vehicle K as compared with the case in which only the outer side in the vehicle width direction of the mirror 6 is bent and deformed. Therefore, as shown in Figs. 10A and 10B, the sense of distance from the vehicle body 2 to the following vehicle K can be easily obtained by bending and deforming only the outer side in the vehicle width direction of the mirror 6.

The deformation driving portion 20 configured as above can be operated manually or automatically.

In the case of manual operation, for example, an operation button for bending and deforming the mirror 6 is provided inside the vehicle and then the deformation driving portion 20 is driven on the basis of the operation of the operation button.

On the other hand, in the case of automatic operation, the deformation driving portion 20 is driven in conjunction with various devices, sensors, and the like provided in the vehicle body 2. As the devices provided in the vehicle body 2, a turn signal, a reverse gear, a steering, or the like is an example.

When it is linked with a turn signal, the mirror 6 on a corresponding side linked with an operation of either turn signal of the left or right is bent and deformed. Similarly in a case of the steering, the mirror 6 on a corresponding side according to an operating direction of the steering is bent and deformed. In a case of the reverse gear, when the driver engages the reverse gear, the mirrors 6 on both sides are bent and deformed. In all cases, it is preferable to have a wider visible region behind the vehicle body 2.

As the sensors, a rear short-range millimeter wave sensor, a rear sonar, a rear camera, an acceleration sensor, or the like is an example. When an obstacle is detected, all of the rear short-range millimeter waver sensor, the rear sonar, and the rear camera bend and deform the mirrors 6 on both sides. Thereby, the visible region behind the vehicle body 2 is widened. In addition, the acceleration sensor bends and deforms the mirror 6 on the basis of a signal detected by the acceleration sensor, for example, when the driver suddenly brakes. This is because it is preferable that the visible region behind the vehicle body 2 be widened to determine whether or not there is a possibility of rear end collision with a following vehicle at the time of sudden braking.

In this manner, in the first embodiment described above, the mirror 6 is constituted by the mirror main body 15 and the mirror support 16, and further, the tempered glass 17 is used as the mirror main body 15. Since the tempered glass 17 has high impact resistance, its plate thickness can set to be small as compared with a conventional one. When the plate thickness is set to be small, there is less susceptibility to the refractive index of glass and the clarity of the mirror image can be enhanced. Therefore, it is possible to provide the mirror 6 in which good visibility can be obtained.

Also, since the plate thickness of the mirror main body 15 is set to be small, heat of a heater 19 provided in the mirror main body 15 is easily transmitted to the entire mirror main body 15. Therefore, the density of the heating wire 19a constituting the heater 19 with respect to the mirror main body 15 can be reduced. In other words, the heating wire 19a can be laid more sparsely on the mirror main body 15.

Further, since the tempered glass 17 has flexibility, the mirror 6 can be easily bent and deformed. As a result, the visible region behind the vehicle body 2 reflected in the mirror 6 can be widened.

In addition, since the tempered glass 17 is used, whitening does not occur even when a radius of curvature of the tempered glass 17 is changed. Therefore, good visibility can be reliably obtained.

Further, the deformation driving portion 20 is mounted in the door mirror device 1 as means for bending and deforming the mirror 6. Then, the mirror 6 is bent and deformed when the outer side in the vehicle width direction of the mirror 6 is pulled by the deformation driving portion 20 while the mirror 6 is fixed between substantially the center portion in the vehicle width direction and the inner side in the vehicle width direction by the pivot plate 26 of the drive unit 7. Therefore, the mirror 6 can be easily bent and deformed to have an arbitrary radius of curvature and thus a user-friendly mirror 6 can be provided.

In addition, since the deformation driving portion 20 and the pivot plate 26 of the drive unit 7 cooperate to bend and deform only the outer side in the vehicle width direction of the mirror 6, the sense of distance from the vehicle body 2 to the following vehicle K can be easily obtained while widening the visible region behind the vehicle body 2.

Therefore, safety of operations such as lane change can be enhanced as compared with a case in which the entire mirror 6 is bent and deformed. Further, since the mirror 6 is pulled to be bent and deformed, the mirror 6 does not protrude from the mirror housing 4 when the mirror 6 is bent and deformed. Therefore, the mirror 6 can be bent and deformed while the mirror 6 is accommodated in the mirror housing 4.

Further, since the grooves 23 are formed on the front surface 16a of the mirror support 16, the entire mirror 6 can be easily bent and deformed.

In addition, formation of the grooves 23 in the mirror support 16 can be omitted by forming the mirror support 16 from a flexible material. As a material for the flexible resin, a thermoplastic elastomer (TPE) or the like is an example.

### (Second embodiment)

Next, a second embodiment will be described on the basis of Figs. 12 to 13B.

Fig. 12 is a partially enlarged perspective view of a mirror 206 in the second embodiment. Aspects the same as in the first embodiment are assigned the same reference signs and description thereof will be omitted (this is the same in subsequent embodiments).

As shown in Fig. 12, a different point between the first embodiment and the second embodiment is that the deformation driving portion 20 is fixed to the pivot plate 26 in the first embodiment, whereas a deformation driving portion 20 is fixed to a mirror support 216 in the second embodiment.

The mirror support 216 is formed of a resin and has a base portion 221 to which a mirror main body 15 is fixed. The mirror main body 15 and the base portion 221 are fixed with an adhesive or the like. Here, the base portion 221 is not formed to correspond to an outer shape of the mirror main body 15 as in the first embodiment described above. Specifically, a vertical width of the base portion 221 is set to be substantially the same as the vertical width of the mirror main body 15. On the other hand, the base portion 221 in a vehicle width direction is formed between slightly to the outer side of a center in the vehicle width direction of the mirror main body 15 and an inner edge of the mirror main body 15 in the vehicle width direction. That is, the outer side in the vehicle width direction of the mirror main body 15 is not supported by the base portion 221.

A deformation driving portion bracket 265 is integrally formed on an outer edge in the vehicle width direction of the base portion 221. Then, the deformation driving portion 20 is fixed to the deformation driving portion bracket 265. The deformation driving portion bracket 265 is formed such that an attachment surface 265a to which the deformation driving portion 20 is attached is offset forward from a surface of the base portion 221 on the mirror main body 15 side. Therefore, in a state in which an actuating shaft 72 of the deformation driving portion 20 extends, a tip of the actuating shaft 72 and the surface of the base portion 221 on the mirror main body 15 side are positioned on substantially the same plane. The tip of the actuating shaft 72 of the deformation driving portion 20 is rotatably connected to the back surface of the mirror main body 15.

Also, a bending guide 266 is integrally formed on the outer edge in the vehicle width direction of the base portion 221. The bending guide 266 restricts an amount of bending deformation of the mirror main body 15 and is formed to extend from the outer edge in the vehicle width direction of the base portion 221 toward the actuating shaft 72 while bending slightly forward. A U-shaped groove 266a is formed at a tip of the bending guide 266. Thereby, the tip of the bending guide 266 is bifurcated. Then, the actuating shaft 72 is inserted into the U-shaped groove 266a of the bending guide 266.

### (Bending deformation operation of mirror)

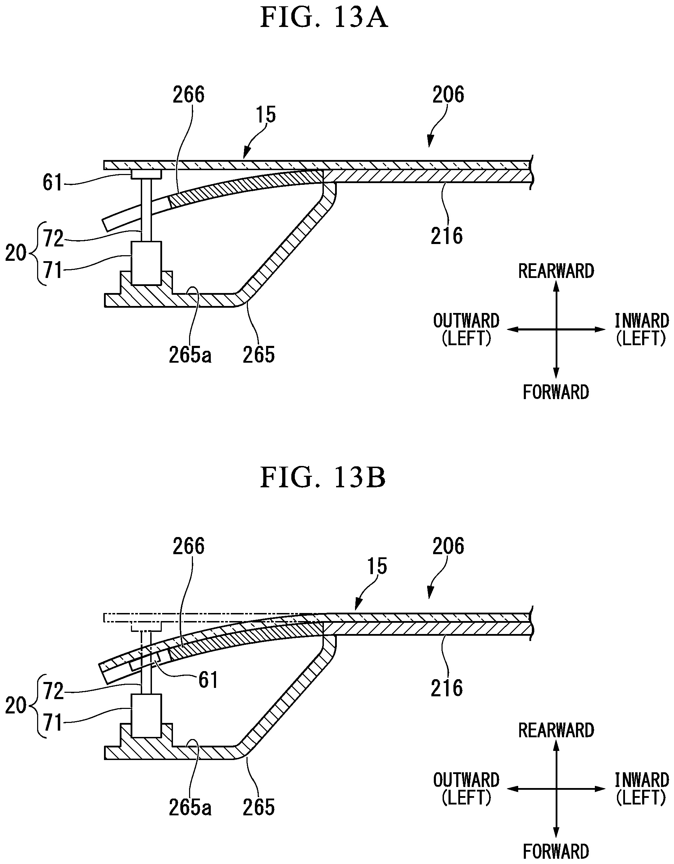

Fig. 13A is a view showing a bending deformation operation of the mirror 206 and showing a state in which the mirror main body 15 is flat. Fig. 13B is a view showing a bending deformation operation of the mirror 206 and showing a state in which the mirror main body 15 is bent and deformed.

As shown in Fig. 13A, normally the actuating shaft 72 of the deformation driving portion 20 extends and the mirror main body 15 is entirely flat.

In contrast, as shown in Fig. 13B, when the actuating shaft 72 of the deformation driving portion 20 retracts, the outer side in the vehicle width direction of the mirror main body 15 is pulled toward the front.

Here, since most of the mirror main body 15 excluding the outer side in the vehicle width direction is fixed to the mirror support 216, when the outer side in the vehicle width direction of the mirror main body 15 is pulled, the outer side in the vehicle width direction is bent and deformed. Also, since the bending guide 266 is provided in the mirror support 216, the mirror main body 15 is bent and deformed along the bending guide 266.

Therefore, according to the second embodiment described above, the same effects as those of the first embodiment can be achieved. Also, since the bending guide 266 is provided, the amount of bending deformation of the mirror main body 15 can be accurately restricted to a desired amount.

Here, in the second embodiment, the deformation driving portion 20 is fixed to the mirror support 216 and only the mirror main body 15 is bent and deformed, instead of bending and deforming the mirror 6 together with the mirror support 16 as in the first embodiment. Therefore, the mirror support 216 in the second embodiment is formed of a hard material of resin. Specifically, as a resin that forms the mirror support 216, PBT (polybutylene terephthalate), PBT (with GF), PPS (Poly Phenylene Sulfide Resin), and the like are examples.

In the second embodiment described above, the case in which the mirror main body 15 and the base portion 221 are fixed with an adhesive or the like has been described. However, the present invention is not limited thereto, and the mirror main body 15 may be fitted and fixed to the base portion 221.

### (Third embodiment)

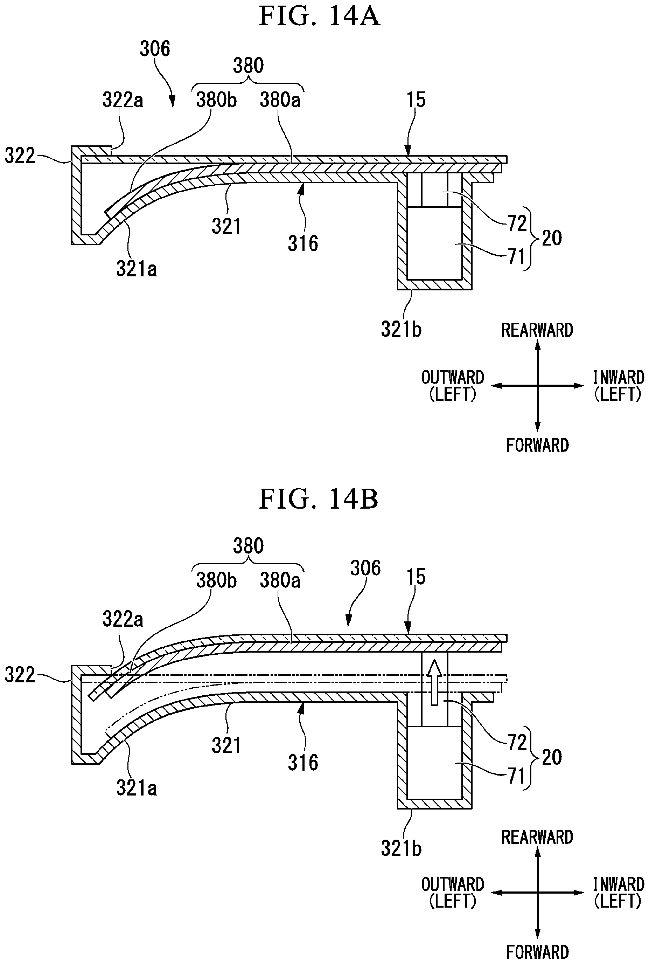

Next, a third embodiment will be described on the basis of Figs. 14A to 14B.

Fig. 14A is a view showing a bending deformation operation of a mirror 306 in the third embodiment and showing a state in which a mirror main body 15 is flat. Fig. 14B is a view showing a bending deformation operation of the mirror 306 and showing a state in which the mirror main body 15 is bent and deformed.

As shown in Figs 14A and 14B, a different point between the second embodiment and the third embodiment is that the mirror main body 15 is bent and deformed by pulling the mirror main body 15 forward by the deformation driving portion 20 in the second embodiment, whereas the mirror main body 15 is bent and deformed by pushing the mirror main body 15 rearward by a deformation driving portion 20 in the third embodiment.

More specifically, as shown in Fig. 14A, a mirror support 316 of the third embodiment is integrally molded and includes a base portion 321 formed to correspond to an outer shape of the mirror main body 15 and a fitting portion 322 formed to stand up from an outer peripheral edge of the base portion 321.

A bent portion 321a that is bent toward the front is formed on an outer side in the vehicle width direction of the base portion 321. On the other hand, a driver accommodating concave portion 321b for accommodating a deformation driving portion 20 is formed on an inner side in the vehicle width direction of the base portion 321. The deformation driving portion 20 accommodated in the driver accommodating concave portion 321b is positioned such that a tip of an actuating shaft 72 is on the same plane as the base portion 321 in a state in which the actuating shaft 72 is retracted.

A pushing frame 380 is attached to the tip of the actuating shaft 72 with an adhesive or the like. The pushing frame 380 is a plate-shaped one having high rigidity. Also, the pushing frame 380 is formed to have a size corresponding to a planar shape of the base portion 321 (the bent portion 321a) and is formed to run along the base portion 321 (the bent portion 321a). That is, the pushing frame 380 is constituted by a flat portion 380a and a bent portion 380b.

The mirror main body 15 is provided on the pushing frame 380 formed as above. A portion of the back surface of the mirror main body 15 corresponding to the flat portion 380a of the pushing frame 380 is fixed to the flat portion 380a with an adhesive or the like. In addition, since the mirror main body 15 normally is in a flat state, the mirror main body 15 is separated from the bent portion 380b of the pushing frame 380 in a state in which the actuating shaft 72 of the deformation driving portion 20 is retracted (the state shown in Fig. 14A).

Further, an inner flange portion 322a is formed on a peripheral edge of an outer side in the vehicle width direction in a peripheral edge of the fitting portion 322 in the mirror support 316. The fitting portion 322 is formed such that the outer edge in the vehicle width direction of the mirror main body 15 and the inner flange portion 322a are engaged with each other in a state in which the actuating shaft 72 of the deformation driving portion 20 is retracted (the state shown in Fig. 14A).

In such a configuration above, as shown in Fig. 14B, when the actuating shaft 72 of the deformation driving portion 20 extends, the mirror main body 15 is extruded rearward. At this time, since the outer edge in the vehicle width direction of the mirror main body 15 and the inner flange portion 322a are engaged, the mirror main body 15 is extruded rearward while the outer edge in the vehicle width direction is stopped at this position. Therefore, the outer side in the vehicle width direction of the mirror main body 15 is bent and deformed. At this time, the bent and deformed portion abuts on the bent portion 380b of the pushing frame 380 and becomes a shape running along the bent portion 380b.

Therefore, according to the third embodiment described above, the same effects as those of the first embodiment can be achieved.

### (Fourth embodiment)

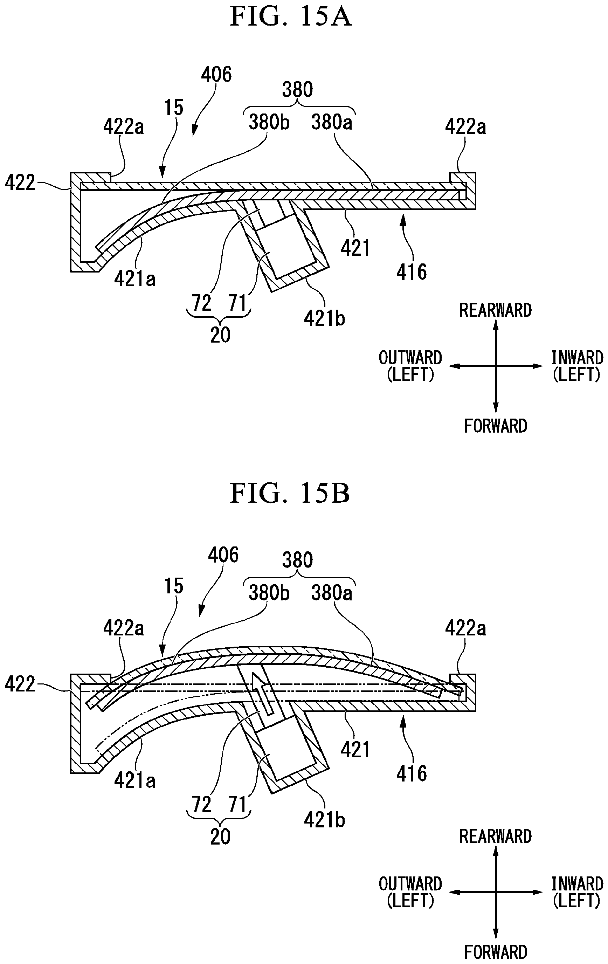

Next, a fourth embodiment will be described on the basis of Figs. 15A to 15B.

Fig. 15A is a view showing a bending deformation operation of a mirror 406 in the fourth embodiment and showing a state in which a mirror main body 15 is flat. Fig. 15B is a view showing a bending deformation operation of the mirror 406 and showing a state in which the mirror main body 15 is bent and deformed.

As shown in Figs. 15A and 15B, a different point between the third embodiment and the fourth embodiment is that a position of the deformation driving portion 20 is different.

More specifically, a mirror support 416 of the fourth embodiment is integrally molded and includes a base portion 421 formed to correspond to an outer shape of the mirror main body 15 and a fitting portion 422 formed to stand up from an outer peripheral edge of the base portion 421.

A bent portion 421a that is bent toward the front is formed on an outer side in the vehicle width direction of the base portion 421. On the other hand, a driver accommodating concave portion 421b for accommodating the deformation driving portion 20 is formed at substantially a center in the vehicle width direction of the base portion 421, that is, in the vicinity of a base portion of the bent portion 421a. The driver accommodating concave portion 421b is formed such that an axial direction thereof is slightly inclined with respect to the front-rear direction.

The deformation driving portion 20 accommodated in the driver accommodating concave portion 421b is positioned such that a tip of an actuating shaft 72 is on the same plane as the base portion 421 in a state in which the actuating shaft 72 is retracted. In addition, since the driver accommodating concave portion 421b is formed to be slightly inclined with respect to the front-rear direction, the deformation driving portion 20 is also accommodated such that the actuating shaft 72 is slightly inclined with respect to the front-rear direction. The actuating shaft 72 of the deformation driving portion 20 extends obliquely outward in the vehicle width direction when it extends.

A pushing frame 380 is rotatably connected to a tip of the actuating shaft 72. Also, a part of the mirror main body 15 is fixed with an adhesive or the like to a portion corresponding to a flat portion 380a of the pushing frame 380. Further, an inner flange portion 422a is formed respectively at a peripheral edge of an outer side in the vehicle width direction and at a peripheral edge of an inner side in the vehicle width direction in a peripheral edge of the fitting portion 422 in the mirror support 416. The fitting portion 422 is formed such that the outer edge in the vehicle width direction of the mirror main body 15 and the inner edge in the vehicle width direction of the mirror main body 15 are respectively engaged with the inner flange portion 322a in a state in which the actuating shaft 72 of the deformation driving portion 20 is retracted (the state shown in Fig. 15A).

In such a configuration above, as shown in Fig. 15B, when the actuating shaft 72 of the deformation driving portion 20 extends, the mirror main body 15 is extruded rearward. At this time, since the outer edge in the vehicle width direction of the mirror main body 15 and the inner flange portion 322a are engaged, the mirror main body 15 is extruded rearward while the outer edge in the vehicle width direction and the inner edge in the vehicle width direction are stopped at the position. Further, since substantially a center in the vehicle width direction of the pushing frame 380 is extruded obliquely outward by the deformation driving portion 20, the pushing frame 380 is formed to be extruded such that the flat portion 380a is slightly inclined inward in the vehicle width direction.

Therefore, when the mirror main body 15 is extruded by the actuating shaft 72 of the deformation driving portion 20, the outer side in the vehicle width direction of the mirror main body 15 is bent and deformed along a bent portion 380b of the pushing frame 380 while a portion of the mirror main body 15 corresponding to the flat portion 380a of the pushing frame 380 is slightly inclined inward in the vehicle width direction.

Therefore, according to the fourth embodiment described above, the same effects as those of the third embodiment can be achieved. In addition to this, when the outer side in the vehicle width direction of the mirror main body 15 is bent and deformed, since the entire mirror main body 15 is bent and deformed while it is slightly inclined inward in the vehicle width direction, the vehicle body 2 (see Fig. 10B) can easily be reflected in the inner side in the vehicle width direction of the entire mirror main body 15. Therefore, for example, the sense of distance between the vehicle body 2 and the following vehicle K can be more easily obtained.

### (Fifth embodiment)

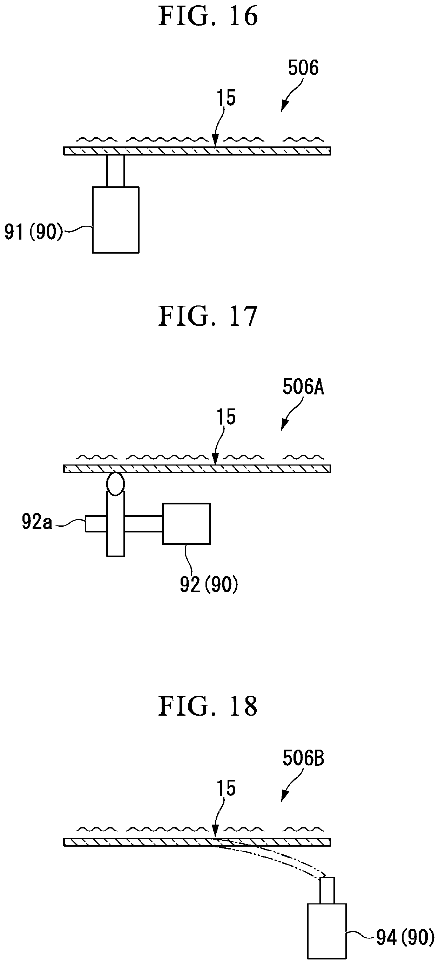

Next, a fifth embodiment will be described on the basis of Fig. 16.

Fig. 16 is a schematic configuration view of a mirror 506 in the fifth embodiment.

As shown in Fig. 16, a different point between the first embodiment and the fifth embodiment is that the deformation driving portion 20 for bending and deforming the mirror 6 is provided on the pivot plate 26 in the first embodiment, whereas a vibration generating device 90 is provided on a pivot plate 26 instead of the deformation driving portion 20 in the fifth embodiment.

The vibration generating device 90 is for applying vibration to a mirror main body 15. As the vibration generating device 90, a linear actuator 91 is employed, for example. Then, an actuating shaft 91a of the linear actuator 91 is brought into contact with a back surface of the mirror 506, the linear actuator 91 is driven in this state, and thereby vibration is applied to the mirror main body 15. When the vibration is applied, water droplets adhering to a surface of the mirror main body 15 (a surface 17b of tempered glass 17 (see Fig. 4)) can be repelled. Therefore, even when traveling in rainy weather, for example, good visibility can be maintained in the mirror 506.

Here, since the tempered glass 17 is used for the mirror main body 15, the plate thickness thereof is set to be small as compared with that of a conventional mirror (a mirror manufactured using ordinary glass). As a result, the vibration applied from the linear actuator 91 is easily transmitted to the entire mirror main body 15.

Therefore, according to the fifth embodiment described above, it is possible to prevent deterioration of visibility in the mirror 506 due to adhesion of water droplets or the like to the surface of the mirror main body 15.

In addition, it is possible to reduce a size of the vibration generating device 90 (the linear actuator 91) according to it being easier to transmit vibration to the entire mirror main body 15. Then, with weak vibrations, water droplets on the surface of the mirror main body 15 can be efficiently repelled, for example.

Further, a configuration of the vibration generating device 90 can be simplified by employing the linear actuator 91 as the vibration generating device 90.

In the fifth embodiment described above, the case in which the linear actuator 91 is employed as the vibration generating device 90 has been described. However, the present invention is not limited thereto, and may be a structure which can apply vibration to the mirror main body 15. Specific examples will be given below.

### (First modified example of the fifth embodiment)

Fig. 17 is a schematic configuration view of a mirror 506A in a first modified example of the fifth embodiment.

As shown in Fig. 17, a motor 92 can be employed as the vibration generating device 90.

A vibration cam 93 is provided in a rotating shaft 92a of the motor 92. The vibration cam 93 is formed such that an outer circumferential surface thereof is intermittently brought into contact with a back surface of the mirror 506A when the vibration cam 93 rotates. Therefore, when the motor 92 is driven, vibration is applied to the mirror 506A.

### (Second modified example of the fifth embodiment)

Fig. 18 is a schematic configuration view of a mirror 506B in a second modified example of the fifth embodiment.

As shown in Fig. 18, a suction device 94 can be employed as the vibration generating device 90.

As the suction device 94, a nozzle connected to a vacuum pump, an electromagnet capable of magnetically suctioning a metal piece that is attached to a back surface of the mirror 506B, or the like is an example.

Then, vibration can be applied to the mirror 506B by repeatedly suctioning and releasing the mirror 506B by the vibration generating device 90.

### (Sixth embodiment)

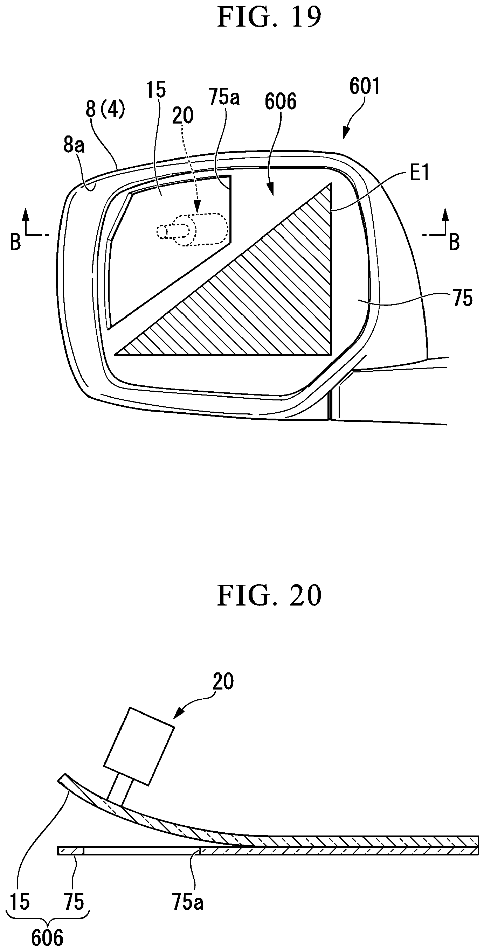

Next, a sixth embodiment will be described on the basis of Figs. 19 and 20.

Fig. 19 is a perspective view of a door mirror device 601 in the sixth embodiment and corresponds to Fig. 1 described above. Fig. 20 is a cross-sectional view of a mirror 606 and corresponds to a cross section taken along line B-B of Fig. 19.

As shown in Figs. 19 and 20, a different point between the first embodiment and the sixth embodiment is that the mirror 6 of the first embodiment is constituted by the mirror main body 15 and the mirror support 16, whereas a mirror 606 of the sixth embodiment is constituted by a mirror main body 15 and a normal mirror 75 which overlaps a surface of the mirror main body 15.

The normal mirror 75 is a general mirror, is not configured with the tempered glass 17 having flexibility such as the mirror main body 15, and has no flexibility. In addition, it is possible to employ the same configuration as the mirror main body 15 also for the normal mirror 75. An outer shape of the normal mirror 75 is set to be substantially the same as an outer shape of the mirror main body 15. In the mirror 606 configured as described above, the normal mirror 75 is disposed on a rear side.

Here, a mirror opening 75a is formed in a part of the normal mirror 75 other than a region E1 regulated by law. Then, a part of the mirror main body 15 is exposed on a surface (rear side) of the normal mirror 75 via the mirror opening 75a.

In addition, the region E1 regulated by law stated here refers to a region in which a mirror curvature radius of the door mirror device 1 is defined by each country, state, prefecture, or the like. That is, formation of the mirror opening 75a in the normal mirror 75 and exposure of the mirror main body 15 from the mirror opening 75a make it possible to strictly observe regulations without reliably bending and deforming the region E1. Thus, the rear side can be checked by bending deformation of the mirror main body 15 or the like only in a position other than the region E1.

In the sixth embodiment described above, the case in which the mirror opening 75a is formed in the normal mirror 75 and the mirror main body 15 is exposed via the mirror opening 75a has been described. However, the present invention is not limited thereto, and the position corresponding to the mirror opening 75a may be simply a transparent glass plate or a resin plate instead of forming the mirror opening 75a.

### (First modified example of the sixth embodiment)

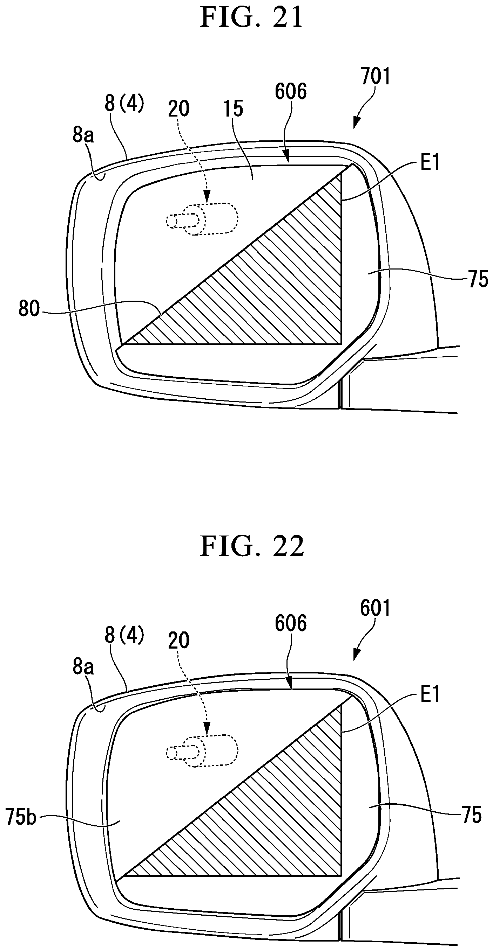

In the sixth embodiment described above, the case in which the mirror opening 75a is formed in a part of the normal mirror 75 other than the region E1 has been described. However, the present invention is not limited thereto, and the normal mirror 75 may be formed only in the region E1 as shown in Fig. 21. Then, the mirror main body 15 may be configured to be exposed from an opening 8a of a mirror housing 4 (housing main body 8) in an entire area other than a portion in which the normal mirror 75 is provided. In other words, the mirror main body 15 may be configured to be exposed from an opening 80 surrounded by the normal mirror 75 and the mirror housing 4 (housing main body 8).

Also, when the normal mirror 75 is provided with such a configuration, good visibility behind the vehicle body 2 using the door mirror device 601 can be maintained. In addition, the normal mirror 75 can be easily processed.

### (Second modified example of the sixth embodiment)

Further, as shown in Fig. 22, in the normal mirror 75, only the region E1 may be configured as a mirror, and the entire area other than the region E1 may be simply formed of a transparent glass plate or a resin plate (a transparent plate 75b in Fig. 22). In the case in which the normal mirror 75 is provided, even with such a configuration as above, good visibility behind the vehicle body 2 using the door mirror device 1 can be maintained.

In addition, irregularities are not formed on a surface of the normal mirror 75 and thus it is possible to provide a door mirror device 601 with excellent design.

### (Third modified example of the sixth embodiment)

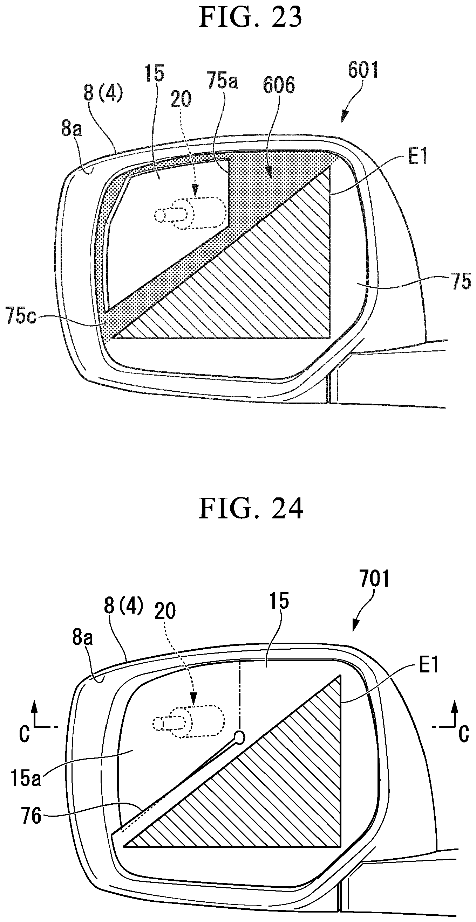

Also, as shown in Fig. 23, a portion of the normal mirror 75 other than the region E1 may be a non-mirror portion 75c that is non-transparent, that is, not reflecting a mirror image, and the mirror opening 75a may be formed in the non-mirror portion 75c. As the non-mirror portion 75c, for example, various plate materials such as a colored resin, frosted glass, black glass, or the like can be employed.

With such a configuration, it is possible to prevent an unnecessary mirror image from being reflected in the normal mirror 75 outside of the region E1. Therefore, an area behind the vehicle body 2 can be easily checked.

Further, the entire portion other than the region E1 in the normal mirror 75 may not be the non-mirror portion 75c, and at least a portion of the normal mirror 75 other than the region E1 may be the non-mirror portion 75c.

### (Seventh embodiment)

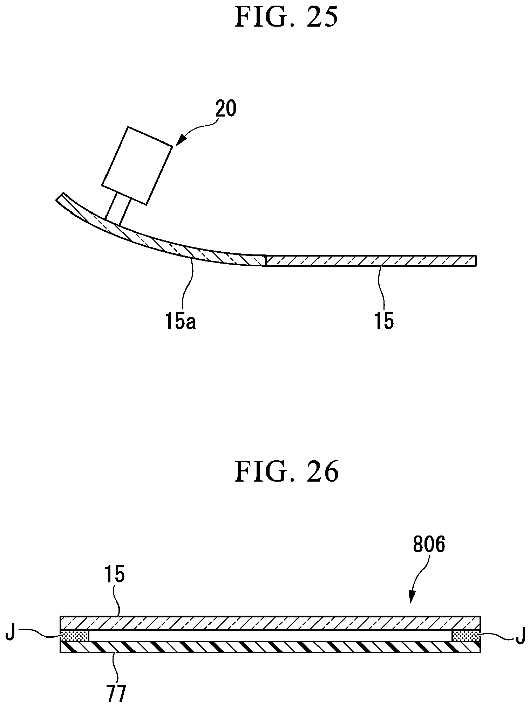

Next, a seventh embodiment will be described on the basis of Figs. 24 and 25.

Fig. 24 is a perspective view of a door mirror device 701 in the seventh embodiment and corresponds to Fig. 1 described above. Fig. 25 is a cross-sectional view of a mirror 706 and corresponds to a cross section taken along line C-C of Fig. 24.

As shown in Figs. 24 and 25, a cut portion 76 is formed in a part of a mirror main body 15 of the seventh embodiment. This point is different from the first embodiment described above.

More specifically, the cut portion 76 is formed obliquely downward in the vehicle width direction from a side slightly above a center of the mirror main body 15 to avoid a region E1 regulated by law. Further, the region E1 is the same as the region E1 of the sixth embodiment described above.

By forming the cut portion 76 in the mirror main body 15, a region on a side opposite to the region E1 with the cut portion 76 interposed therebetween can be configured as a partial deformation portion 15a of the mirror main body 15. That is, the partial deformation portion 15a can be bent and deformed independently of the region E1.

Therefore, according to the seventh embodiment described above, the same effects as those of the sixth embodiment can be achieved. In addition to this, the mirror main body 15 (the partial deformation portion 15a) can be bent and deformed only at a position avoiding the region E1 without the normal mirror 75 being provided as in the sixth embodiment described above. Therefore, the number of parts can be decreased as compared with in the sixth embodiment described above and thus manufacturing costs of the door mirror device 701 can be decreased.

### (Eighth embodiment)

Next, an eighth embodiment will be described on the basis of Fig. 26.

Fig. 26 is a cross-sectional view of a mirror 806 in the eighth embodiment.

As shown in Fig. 26, a different point between the first embodiment and the eighth embodiment is that the mirror 6 of the first embodiment is constituted by the mirror main body 15 and the mirror support 16, whereas the mirror 806 of the eighth embodiment does not have a mirror support 16 and a back plate 77 is adhered and fixed to a back surface of a mirror main body 15 with an adhesive J.

The back plate 77 is a plate-shaped one formed of a flexible metal or resin. Also, the back plate 77 is set to be substantially the same as an outer shape of the mirror main body 15.

The adhesive J for adhering and fixing the back plate 77 and the mirror main body 15 is applied to the respective outer peripheral portions of the mirror main body 15 and the back plate 77. In addition, it is preferable that the adhesive J be applied at a plurality of positions (for example, four positions) with intervals therebetween instead of applying the adhesive J over the entire periphery of the outer peripheral portions of the mirror main body 15 and the back plate 77.

With such a configuration, the entire mirror 806 can be made slimmer as compared with the case in which the mirror main body 15 is held by the mirror support 16 as in the first embodiment described above.

In addition, when a back surface (front surface) of the mirror 806 is pulled by an actuating shaft 72 of a deformation driving portion 20 (see Fig. 2) and the mirror 806 is bent and deformed, for example, it is possible to prevent the mirror 806 from being locally deformed by pulling only the portion in which the actuating shaft 72 and the mirror 806 are connected.

That is, when the mirror main body 15 is pulled as it is by the actuating shaft 72, only the connecting portions between the mirror main body 15 and the actuating shaft 72 are strongly pulled, and there is a possibility that the mirror main body 15 may be locally distorted. However, when the back plate 77 is provided on the mirror main body 15 and the actuating shaft 72 is connected to the back plate 77, the whole of desired portions of the mirror main body 15 can be uniformly bent and deformed.

In addition, when both the mirror main body 15 and the back plate 77 are collectively bent and deformed in a state in which the mirror main body 15 and the back plate 77 are overlapped with each other, since radii of curvature of the mirror main body 15 and the back plate 77 are slightly different, relative positions thereof are deviated. Therefore, by bonding and fixing only the outer peripheral portion of the back surface of the mirror main body 15 and the outer peripheral portion of the back plate 77 by using the adhesive J, stress caused by relative positional deviation can be prevented from being applied to other portions and the back plate 77 can be prevented from being locally deformed (deformed such as wrinkles).

In the eighth embodiment described above, the case in which the adhesive J is applied to the respective outer peripheral portions of the mirror main body 15 and the back plate 77 has been described. However, the present invention is not limited thereto, and the adhesive J may be applied to an entire back surface of the mirror main body 15 and an entire surface of the back plate 77 so that the mirror main body 15 and the back plate 77 are adhered and fixed. However, in this case, an adhesive having elasticity after curing is used as the adhesive J. With such a configuration, the relative positional deviation caused when both the mirror main body 15 and the back plate 77 are collectively bent and deformed in a state in which the mirror main body 15 and the back plate 77 are overlapped with each other can be absorbed by the adhesive J.

The present invention is not limited to the above-described embodiments, and includes various modifications added to the above-described embodiments without departing from the spirit and scope of the present invention.

For example, in the embodiments described above, the case in which the mirror main body 15 is employed in the door mirror device 1 provided in the vehicle body 2 has been described. However, the present invention is not limited thereto, and the mirror main body 15 can be used for various purposes. For example, the mirror main body 15 may be employed as an interior mirror provided in the vehicle body 2. Also, the mirror main body 15 can also be used simply as a mirror (a full-length mirror or the like). In this case, the tempered glass 17 constituting the mirror main body 15 may not have flexibility. When the mirror main body 15 is used as a simple mirror, it is possible to provide a mirror with a high degree of mirror image clarity.

Also, in the embodiments described above, the case in which the outer side in the vehicle width direction of the mirror main body 15 is bent and deformed by the deformation driving portion 20 has been described. However, the present invention is not limited thereto, and the portion to be bent and deformed may be changed according to specifications. For example, a lower side of the mirror main body 15 may be bent and deformed to widen a visible region on the side below the vehicle body 2, and thereby the door mirror device 1 can provide support such that the vehicle body 2 does not ride over the curbstones or the like when reversed.

Further, in the embodiments described above, the case in which the deformation driving portion 20 for bending and deforming the mirror main body 15 is configured by the linear actuator has been described. However, the present invention is not limited thereto, and the deformation driving portion 20 can be configured by various devices.

For example, a metal piece may be provided on the mirror main body 15 and an electromagnet capable of magnetically suctioning the metal piece may be provided to bend and deform the mirror main body 15 using a magnetic force of the electromagnet.

Also, a bimetallic strip may be provided on the back surface of the mirror main body 15 and the bimetallic strip may be configured as the deformation driving portion.

Further, a shape memory alloy may be provided instead of the bimetallic strip.

In addition, a cam may be provided on the rotating shaft of the motor and the cam may be pressed against the mirror main body 15 to bend and deform the mirror main body 15.

Further, an actuator which converts a rotational motion of the motor into a rectilinear motion may be used in combination, and the mirror main body 15 may be bent and deformed by the actuator.

In addition, configurations of the respective embodiments can be arbitrarily combined and used. For example, the deformation driving portion 20 of the first embodiment and the vibration generating device 90 of the fifth embodiment can be used in combination. Further, the mirror 806 of the eighth embodiment described above may be applied to the mirrors 6 to 506B of the first to fifth embodiments, or applied to the mirror main body 15 of the sixth and seventh embodiments, and thereby the mirror support 16 can be deleted.

### [Industrial Applicability]

According to the mirror described above, it is possible to set a plate thickness of glass to be small by using tempered glass. When the plate thickness is set to be small, there is less susceptibility to the refractive index of glass, and the clarity of the mirror image can be enhanced. Therefore, a mirror in which good visibility can be obtained can be provided.

### Explanation of Numerals and Characters

- 1: Door mirror device (vehicle mirror)
- 2: Vehicle body
- 4: Mirror housing (housing)
- 6, 206, 306, 406, 506, 506A, 506B, 606, 706, 806: Mirror
- 15: Mirror main body (mirror)
- 15a: Partial deformation portion
- 17: Tempered glass
- 17a: Back surface
- 17b: Surface
- 18: Thin film
- 19: Heater
- 20: Deformation driving portion (curvature changing device, driving portion)
- 26: Pivot plate (support plate)
- 75: Normal mirror
- 75a: Opening (mirror exposing portion)
- 75b: Transparent plate (mirror exposing portion)
- 75c: Non-mirror portion
- 76: Cut portion
- 77: Back plate
- 80: Opening
- 90: Vibration generating device
- E 1: Region
- J: Adhesive (joint portion)

## Claims

1. A vehicle mirror (1) comprising:
a mirror (15) on which a thin film (18) is provided on a flexible tempered glass (17);
a housing (4) which holds the mirror (15);
a curvature changing device (20) provided inside the housing (4) and with which the mirror (15) is bent and deformed and a radius of curvature of the mirror (15) is variable; and
a driving portion (20) provided in the curvature changing device (20) and configured to push and pull at least a portion of the mirror (15),
**characterized in that**
a back plate (77) connected to the driving portion (20) is provided on a back surface of the mirror (15), and
only an outer peripheral portion of the mirror (15) and an outer peripheral portion of the back plate (77) are adhered to each other.

2. The vehicle mirror (1) according to claim 1, wherein
the housing (4) is provided on a side surface of a vehicle body (2); and
the curvature changing device (20) is configured to bend and deform at least one of a side opposite to the vehicle body (2) with respect to a center in a vehicle width direction of the mirror (15) and a lower side with respect to a center in a vehicle height direction of the mirror (15).

3. The vehicle mirror (1) according to claim 1 or 2, wherein a curvature varying device includes a support plate (26, 216) which is configured to fix the mirror (15) to prevent the mirror (15) from being bent and deformed by the driving portion (20).

4. The vehicle mirror (1) according to any one of claims 1 to 3, wherein a support (16, 266, 380) for supporting the mirror (15) is provided in the housing (4) so that the mirror (15) is bent and deformed into a predetermined shape by the curvature varying device.

5. The vehicle mirror (1) according to any one of claims 1 to 4, comprising a vibration generating device (90) provided in the housing (4) and configured to apply vibration to a back surface side of the mirror (15).

6. The vehicle mirror (1) according to claim 5, wherein the vibration generating device (90) is a linear actuator.

7. The vehicle mirror (1) according to any one of claims 1 to 6, wherein a heater (19) is provided on the back surface of the mirror (15).

8. The vehicle mirror (1) according to any one of claims 1 to 7, wherein:
a normal mirror (75) is provided in the vicinity of the mirror (15); and
the normal mirror (75) has a region in which a radius of curvature of the normal mirror (75) is regulated by law.

9. The vehicle mirror (1) according to claim 8, wherein the normal mirror (75) has a mirror exposing portion (75a, 75b) that exposes the mirror (15) on a surface other than the region.

10. The vehicle mirror (1) according to claim 9, wherein the mirror exposing portion (75a, 75b) is a mirror opening (75a) formed in the normal mirror (75).

11. The vehicle mirror (1) according to claim 8, wherein:
the normal mirror (75) is formed only in the region; and
an opening (80) surrounded by the normal mirror (75) and the housing (4) serves as a mirror exposing portion (75a, 75b) which exposes the mirror (15).

12. The vehicle mirror (1) according to any one of claims 9 to 11, wherein the mirror exposing portion (75a, 75b) is one of a transparent glass and a transparent resin plate.

13. The vehicle mirror (1) according to any one of claims 8 to 12, wherein at least a portion of the normal mirror (75) other than the region is a non-mirror portion (75c) in which no mirror image is reflected.

14. The vehicle mirror (1) according to any one of claims 1 to 7, wherein:
a cut portion (76) is formed in the mirror (15) at a portion other than the region in which a radius of curvature of the mirror (15) is regulated by law; and
a portion of the mirror (15) on a side opposite to the region with the cut portion (76) interposed therebetween is flexible independently of the region.

## Patentansprüche

1. Ein Fahrzeugspiegel (1), der umfasst:
einen Spiegel (15), bei dem ein dünner Film (18) auf flexiblem, gehärtetem Glas (17) aufgebracht ist,
ein Gehäuse (4), das als Halterung des Spiegels (15) dient;
eine Vorrichtung zur Veränderung der Krümmung (20), die innerhalb des Gehäuses (4) vorgesehen ist, damit kann der Spiegel (15) gekrümmt und verformt werden und der Krümmungsradius des Spiegels (15) ist variabel; und
ein Antriebsteil (20) zur Veränderung der Krümmung (20), das in der Vorrichtung vorgesehen ist und dazu konfiguriert ist, auf zumindest einen Abschnitt des Spiegels (15) Zug und Druck auszuüben,
**dadurch gekennzeichnet, dass**
eine mit dem Antriebsteil (20) verbundene Rückplatte (77) auf der rückwärtigen Fläche des Spiegels (15) vorgesehen ist, und
nur ein äußerer Umfangsabschnitt des Spiegels (15) und ein äußerer Umfangsabschnitt der Rückplatte (77) miteinander verbunden sind.

2. Fahrzeugspiegel (1) nach Anspruch 1, wobei
das Gehäuse (4) an einer Seitenfläche eines Fahrzeugkörpers (2) vorgesehen ist; und die Vorrichtung zur Veränderung der Krümmung (20) dazu konfiguriert ist, mindestens eine der, bezogen auf ein Zentrum in der Fahrzeugbreitenrichtung des Spiegels (15), dem Fahrzeugkörper (2) gegenüberliegenden Seiten und eine, bezogen auf ein Zentrum in der Fahrzeughöhenrichtung des Spiegels (15), untere Seite zu krümmen und zu verformen.

3. Fahrzeugspiegel (1) nach Anspruch 1 oder 2, wobei die Vorrichtung zur Veränderung der Krümmung eine Halteplatte (26, 216) enthält, die dazu konfiguriert ist, den Spiegel (15) zu fixieren, so dass verhindert wird, dass der Spiegel (15) vom Antriebsteil (20) gekrümmt und verformt wird.

4. Fahrzeugspiegel (1) nach irgendeinem der Ansprüche 1 bis 3, wobei eine Halterung (16, 266, 380) zum Halten des Spiegels (15) am Gehäuse (4) vorgesehen ist, so dass der Spiegel (15) von der Vorrichtung zur Veränderung der Krümmung gekrümmt und verformt wird.

5. Fahrzeugspiegel (1) nach irgendeinem der Ansprüche 1 bis 4, mit einer vibrationserzeugenden Vorrichtung (90), die im Gehäuse (4) vorgesehen und dazu konfiguriert ist, Vibrationen auf eine rückwärtige Fläche des Spiegels (15) auszuüben.

6. Fahrzeugspiegel (1) nach Anspruch 1, wobei die vibrationserzeugende Vorrichtung (90) ein Linearantrieb ist.

7. Fahrzeugspiegel (1) nach irgendeinem der Ansprüche 1 bis 6, wobei ein Heizgerät (19) an der Rückseite des Spiegels (15) vorgesehen ist.

8. Fahrzeugspiegel (1) nach irgendeinem der Ansprüche 1 bis 7, wobei:
ein normaler Spiegel (75) in der Nähe des Spiegels (15) vorgesehen ist; und
der normale Spiegel (75) einen Bereich hat, in dem der Krümmungsradius des normalen Spiegels (75) den gesetzlichen Bestimmungen entspricht.

9. Fahrzeugspiegel (1) nach Anspruch 8, wobei der normale Spiegel (75) einen Expositionsabschnitt des Spiegels aufweist (75a, 75b), in dem der Spiegel (15) auf einer anderen Fläche als diesem Bereich exponiert ist.

10. Fahrzeugspiegel (1) nach Anspruch 9, wobei der Expositionsabschnitt des Spiegels (75a, 75b) eine Spiegelöffnung (75a) ist, die im normalen Spiegel (75) gebildet wurde.

11. Fahrzeugspiegel (1) nach Anspruch 8, wobei:
der normale Spiegel (75) nur in dem Bereich gebildet ist; und
eine Öffnung (80), umgeben vom normalen Spiegel (75) und dem Gehäuse (4) als Expositionsabschnitt des Spiegels (75a, 75b) dient, der den Spiegel (15) exponiert.

12. Fahrzeugspiegel (1) nach irgendeinem der Ansprüche 9 bis 11, wobei der Expositionsabschnitt des Spiegels (7 5a, 75b) aus transparentem Glas und einer transparenten Harzplatte besteht.

13. Fahrzeugspiegel (1) nach irgendeinem der Ansprüche 8 bis 12, wobei mindestens ein Abschnitt des normalen Spiegels (75), bei dem es sich nicht um den Bereich handelt, ein nicht spiegelnder Abschnitt (75c) ist, in dem kein Spiegelbild reflektiert wird.

14. Fahrzeugspiegel (1) nach irgendeinem der Ansprüche 1 bis 7, wobei:
ein Schnittabschnitt (76) im Spiegel (15) ausgeformt ist, in einem Abschnitt, bei dem es sic h nicht um den Bereich handelt, in dem der Krümmungsradius des Spiegels (15) den gesetzlichen Bestimmungen entspricht; und
ein Abschnitt des Spiegels (15) auf der Seite gegenüber dem Bereich mit dem Schnittabschnitt (76), der dazwischen liegt, flexibel ist, unabhängig vom Bereich.

## Revendications

1. Rétroviseur de véhicule (1), comprenant :
un miroir (15) sur lequel un film mince (8) est prévu sur un verre trempé flexible (17) ;
un boîtier (4) qui maintient le miroir (15) ;
un dispositif de changement de courbure (20) qui est prévu à l'intérieur du boîtier (4) et à l'aide duquel le miroir (15) est courbé et déformé et grâce auquel le rayon de courbure du miroir (15) peut être modifié ; et
une partie d'entraînement (20) qui est installée à l'intérieur du dispositif de changement de courbure (20) et qui est configurée de manière à pousser et à tirer au moins une partie du miroir (15),
**caractérisé en ce que** :
une plaque d'appui (77) connectée à la partie d'entraînement (20) est prévue sur une surface arrière du miroir (15) ; et
seules une partie périphérique extérieure du miroir (15) et une partie périphérique extérieure de la plaque d'appui (77) sont collées l'une à l'autre.

2. Rétroviseur de véhicule (1) selon la revendication 1, dans lequel :
le boîtier (4) est prévu sur une surface latérale d'une carrosserie de véhicule (2) ; et
le dispositif de changement de courbure (20) est configuré de manière à courber et à déformer au moins un côté parmi un côté opposé à la carrosserie de véhicule (2) par rapport à un centre du miroir (15) dans le sens de la largeur du véhicule et un côté inférieur par rapport à un centre du miroir (15) dans le sens de la hauteur du véhicule.

3. Rétroviseur de véhicule (1) selon la revendication 1 ou 2, dans lequel un dispositif de variation de courbure comprend une plaque de support (26, 216) qui est configurée de manière à fixer le miroir (15) dans le but d'empêcher le miroir (15) d'être plié ou déformé par la partie d'entraînement (20).

4. Rétroviseur de véhicule (1) selon l'une quelconque des revendications 1 à 3, dans lequel un support (16, 266, 380) pour supporter le miroir (15) est prévu dans le boîtier (4) de telle sorte que le miroir (15) soit courbé et déformé en une forme prédéterminée par le dispositif de variation de courbure.

5. Rétroviseur de véhicule (1) selon l'une quelconque des revendications 1 à 4, comprenant un dispositif de génération de vibration (90) qui est prévu dans le boîtier (4) et qui est configuré de manière à appliquer une vibration à un côté de surface arrière du miroir (15).

6. Rétroviseur de véhicule (1) selon la revendication 5, dans lequel le dispositif de génération de vibration (90) est un actionneur linéaire.

7. Rétroviseur de véhicule (1) selon l'une quelconque des revendications 1 à 6, dans lequel un dispositif de chauffage (19) est prévu sur la surface arrière du miroir (15).

8. Rétroviseur de véhicule (1) selon l'une quelconque des revendications 1 à 7, dans lequel :
un miroir normal (75) est prévu dans le voisinage du miroir (15) ; et
le miroir normal (75) comprend une région dans laquelle un rayon de courbure du miroir normal (75) est régulé par une loi.

9. Rétroviseur de véhicule (1) selon la revendication 8, dans lequel le miroir normal (75) présente une partie d'exposition de miroir (75a, 75b) qui expose le miroir (15) sur une surface autre que la région.

10. Rétroviseur de véhicule (1) selon la revendication 9, dans lequel la partie d'exposition de miroir (75a, 75b) consiste en une ouverture de miroir (75a) qui est formée dans le miroir normal (75).

11. Rétroviseur de véhicule (1) selon la revendication 8, dans lequel :
le miroir normal (75) est formé uniquement dans la région ; et
une ouverture (80) qui est entourée par le miroir normal (75) et par le boîtier (4) sert de partie d'exposition de miroir (75a, 75b) pour exposer le miroir (15).

12. Rétroviseur de véhicule (1) selon l'une quelconque des revendications 9 à 11, dans lequel la partie d'exposition de miroir (75a, 75b) est constituée soit d'une plaque de verre transparent, soit d'une plaque de résine transparente.

13. Rétroviseur de véhicule (1) selon l'une quelconque des revendications 8 à 12, dans lequel au moins une partie du miroir normal (75) autre que la région est une partie sans miroir (75c) dans laquelle aucune image miroir n'est réfléchie.

14. Rétroviseur de véhicule (1) selon l'une quelconque des revendications 1 à 7, dans lequel :
une partie de découpe (76) est formée dans le miroir (15) au niveau d'une partie autre que la région dans laquelle un rayon de courbure du miroir (15) est régulé par une loi ; et
une partie du miroir (15) sur un côté opposé à la région qui comporte la partie de découpe (76) intercalée entre ceux-ci est flexible indépendamment de la région.
